(19) Europäisches Patentamt / European Patent Office / Office européen des brevets

(11) **EP 4 280 178 B1**

(12) **EUROPEAN PATENT SPECIFICATION**

(45) Date of publication and mention of the grant of the patent:
**20.05.2026 Bulletin 2026/21**

(21) Application number: **23167488.8**

(22) Date of filing: **12.04.2023**

(51) International Patent Classification (IPC):
**G06V 20/58** (2022.01)     **G06T 7/10** (2017.01)
**G06T 17/00** (2006.01)     **G06V 10/26** (2022.01)
**G06V 10/56** (2022.01)     **G06V 20/64** (2022.01)

(52) Cooperative Patent Classification (CPC):
**G06V 20/58; G06T 7/12; G06V 10/26; G06V 10/56; G06V 20/64;** G06T 2207/10024; G06T 2207/30252

(54) **IMAGE PROCESSING APPARATUS, IMAGE PROCESSING METHOD, MOVABLE APPARATUS, AND STORAGE MEDIUM**

BILDVERARBEITUNGSVORRICHTUNG, BILDVERARBEITUNGSVERFAHREN, BEWEGLICHE VORRICHTUNG UND SPEICHERMEDIUM

APPAREIL DE TRAITEMENT D'IMAGE, PROCÉDÉ DE TRAITEMENT D'IMAGE, APPAREIL MOBILE ET SUPPORT D'INFORMATIONS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **19.05.2022 JP 2022082368**

(43) Date of publication of application:
**22.11.2023 Bulletin 2023/47**

(73) Proprietor: **CANON KABUSHIKI KAISHA**
**Tokyo 146-8501 (JP)**

(72) Inventors:
• **TANAKA, Shin**
  **Tokyo, 146-8501 (JP)**
• **OYA, Tsuyoshi**
  **Tokyo, 146-8501 (JP)**
• **URANO, Yuta**
  **Tokyo, 146-8501 (JP)**

(74) Representative: **TBK**
**Bavariaring 4-6**
**80336 München (DE)**

(56) References cited:
**US-A1- 2021 272 289**

**Description**

BACKGROUND OF THE INVENTION

Field of the Invention

The present invention relates to an image processing apparatus, an image processing method, a movable apparatus, a storage medium, and the like, for processing distance information of an object.

Description of the Related Art

There is an imaging device that has a sensor in which a plurality of pixel regions having a photoelectric conversion function are two-dimensionally arranged and that can acquire an image signal and distance information in each pixel region. In a solid-state imaging element disclosed in Japanese Patent Laid-Open No. 2007-281296, for some or all of pixels of the imaging device, pixels having a distance measurement function are disposed, and a subject distance is detected on the basis of a phase difference detected on an imaging surface (imaging surface phase difference method).
That is, a positional deviation is calculated on the basis of a correlation between two image signals based on images generated by light beams that have passed through different pupil regions of an imaging optical system of the imaging device, and a distance is acquired on the basis of the positional deviation. The correlation between two image signals is evaluated by using a method such as a region-based matching method of cutting out an image signal included in a predetermined collation region from each image signal and evaluating a correlation.
However, for example, if a subject included in the image signal has little change in contrast, or if an amount of noise included in the image signal is large, a correlation may be erroneously evaluated due to a subject or imaging conditions. If there are more than a certain number of erroneous evaluations of the correlation, there is an error in an amount of positional deviation between two calculated image signals, and the accuracy of an acquired distance may be reduced.
One of the objects of the present invention is to provide an image processing apparatus capable of reducing the influence of a distance variation.
Acknowledged is the following prior art:
US 2021/272289 A1 (CAI JIANZHAO [CN] ET AL) 2 September 2021 (2021-09-02)

SUMMARY OF THE INVENTION

According to one aspect of the present invention, there is provided an image processing apparatus as specified in the appended claims.
Further features of the present invention will become apparent from the following description of embodiments with reference to the attached drawings.

BRIEF DESCRIPTION OF THE DRAWINGS

Fig. 1 is a schematic diagram showing a configuration example of a vehicle 100 according to First Embodiment.
Fig. 2 is a block diagram showing an internal configuration example of the vehicle 100 according to First Embodiment.
Fig. 3 is a functional block diagram showing a configuration example of the route generation apparatus 150 according to First Embodiment.
Figs. 4A and 4B are schematic diagrams showing configuration examples of imaging elements according to First Embodiment.
Figs. 5A to 5D are schematic diagrams for describing a relationship between a subject distance and incident light in the imaging surface phase difference method.
Figs. 6A and 6B are flowcharts showing examples of processes executed by an image processing unit 310 according to First Embodiment.
Figs. 7A and 7B are flowcharts showing examples of processes executed by a boundary processing unit 321 and an object detection unit 323 according to First Embodiment.
Figs. 8A to 8E are schematic diagrams showing examples of images and information in an example of a process performed by an object information generation unit 320 according to First Embodiment.
Fig. 9 is a flowchart showing a specific example of an object boundary candidate determination process in step S7011 in Fig. 7B performed by the boundary processing unit 321.

Fig. 10 is a flowchart showing a detailed example of a distance equivalent information combining process in step 7012 in Fig. 7B, performed by a distance information generation unit 322.

Fig. 11 is a flowchart showing a detailed example of an object detection process in step 7012 in Fig. 7B, performed by the object detection unit 323.

Fig. 12 is a flowchart showing an example of distance information generation process for each object, performed by the distance information generation unit 322.

Fig. 13 is a flowchart showing an example of a route generation process executed by a route generation unit 330 according to First Embodiment.

Fig. 14 is a flowchart showing an example of an object distance information generation process performed by a distance information generation unit 322 in Second Embodiment.

Fig. 15 is a schematic diagram for describing an example of temporal change in object distance information of an object having the same identification number as that of an N-th object.

DESCRIPTION OF THE EMBODIMENTS

Hereinafter, with reference to the accompanying drawings, favorable modes of the present invention will be described by using Embodiments. In each diagram, the same reference signs are applied to the same members or elements, and duplicate description will be omitted or simplified. In the following description, an example of a route generation apparatus (electronic apparatus) equipped with an imaging device will be used, but the present invention is not limited to this.

First Embodiment

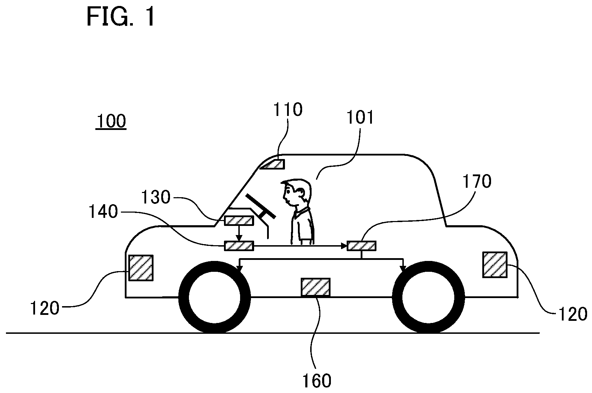

Fig. 1 is a schematic diagram showing a configuration example of a vehicle 100 according to First Embodiment. The vehicle 100 as a movable apparatus includes an imaging device 110, a radar device 120, a route generation ECU 130, a vehicle control ECU 140 and a measurement instrument group 160.

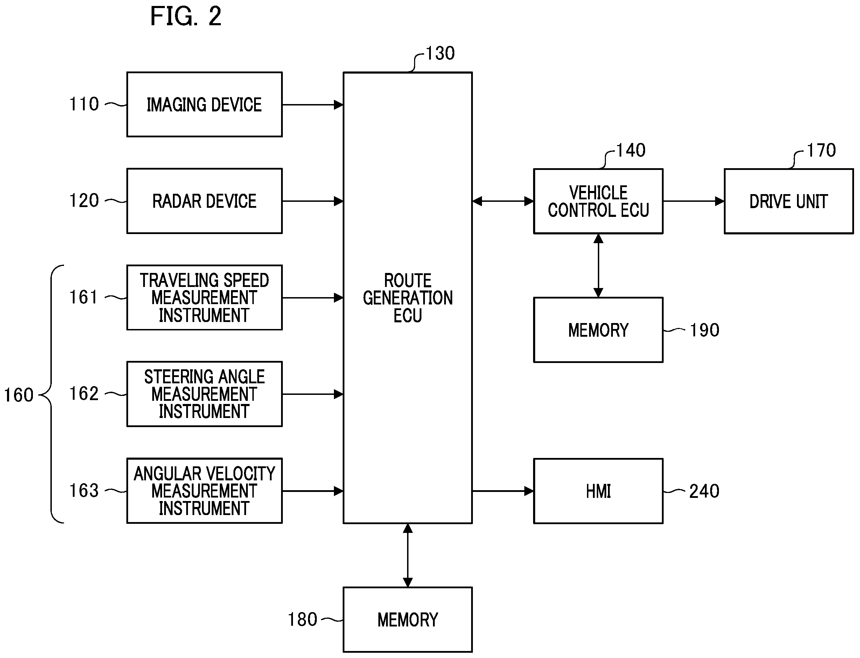

The vehicle 100 further includes a drive unit 170 as a drive control unit for driving the vehicle 100, a memory 190, and the like. The drive unit 170, the memory 190, and the like will be described with reference to Fig. 2.

The imaging device 110, the route generation ECU 130, and the like configure a route generation apparatus 150 as an image processing apparatus. A driver 101 can board the vehicle 100, and the driver 101 faces forward in the vehicle 100 (in the advancing direction) when the vehicle 100 is traveling.

The driver 101 can control an operation of the vehicle by operating operation members such as a steering wheel, an accelerator pedal, and a brake pedal of the vehicle 100. The vehicle 100 may have an automated driving function, or may be remotely controlled from the outside.

The imaging device 110 is disposed to capture an image in front of the vehicle 100 (normal advancing direction). As shown in Fig. 1, the imaging device 110 is disposed, for example, inside near the upper end of a windshield of the vehicle 100, and images a region in a predetermined angular range (hereinafter, an imaging angle of view) in front of the vehicle 100.

The imaging device 110 may include an imaging device disposed to image rearward of the vehicle 100 (a reversing direction opposite to the normal traveling direction), or an imaging device disposed to image the side of the vehicle. That is, a plurality of imaging devices 110 may be disposed in the vehicle 100.

Fig. 2 is a block diagram showing an internal configuration example of the vehicle 100 according to First Embodiment. The imaging device 110 captures an image of the environment (surrounding environment) around the vehicle, including a road (travel road) on which the vehicle 100 is traveling, and detects objects included within the imaging angle of view of the imaging device 110.

The imaging device 110 acquires information regarding a detected object (outside information) and information regarding a distance of the detected object (object distance information), and outputs the information to the route generation ECU 130. The object distance information may be information that can be converted into a distance from a predetermined position of the vehicle 100 to an object by using a predetermined reference table, a predetermined conversion coefficient, or a conversion formula. For example, object distance information in which distances are assigned to predetermined integer values may be sequentially output to the route generation ECU 130.

The imaging device 110 includes, for example, a CMOS image sensor in which a plurality of pixel regions having a photoelectric conversion function are two-dimensionally arranged, and is configured to be able to acquire an object distance according to an imaging surface phase difference method (also called an imaging surface phase difference detection method, an imaging surface phase difference ranging method, and the like). Acquisition of object distance information using the imaging surface phase difference method will be described later.

The radar device 120 is, for example, a millimeter wave radar device that uses electromagnetic waves with wavelengths from the millimeter wave band to the sub-millimeter wave band, and is a detection device that detects an object by emitting electromagnetic waves and receiving reflected waves.

The radar device 120 functions as a fourth distance information acquisition unit configured to acquire distance information (fourth distance information) indicating a distance to an object in a transmission direction of the electromagnetic waves on the basis of the time from irradiation with the electromagnetic waves to reception of the reflected waves and a reception intensity of the reflected waves. The radar device 120 outputs the distance information to the route generation ECU 130.

In First Embodiment, a plurality of radar devices 120 are attached to the vehicle 100. For example, the radar devices 120 are attached to the left and right front sides of the vehicle 100 and to the left and right rear sides of the vehicle 100, respectively.

Each radar device 120 applies electromagnetic waves within a predetermined angular range, and measures a distance from the radar device 120 on the basis of the time from transmission of the electromagnetic waves to reception of the reflected waves and a received intensity of the reflected waves, and generates distance information of the object. In addition to the distance from the radar device 120, the distance information may also include information regarding a reception intensity of the reflected waves and a relative speed of the object.

The measurement instrument group 160 includes, for example, a traveling speed measurement instrument 161, a steering angle measurement instrument 162, and an angular velocity measurement instrument 163, and acquires vehicle information regarding a drive state of the vehicle, such as a traveling speed, a steering angle, and an angular velocity. The traveling speed measurement instrument 161 is a measurement instrument that detects a traveling speed of the vehicle 100. The steering angle measurement instrument 162 is a measurement instrument that detects a steering angle of the vehicle 100.

The angular velocity measurement instrument 163 is a measurement instrument that detects an angular velocity of the vehicle 100 in a turning direction. Each measurement instrument outputs a measurement signal corresponding to a measured parameter to the route generation ECU 130 as vehicle information.

The route generation ECU 130 has a CPU as a computer built thereinto, and generates a travel trajectory of the vehicle 100 and route information regarding the travel trajectory on the basis of measurement signals, outside information, object distance information, distance information, and the like. The route generation ECU 130 outputs the travel trajectory and the route information to the vehicle control ECU 140. Data to be processed or computer programs to be executed by the route generation ECU 130 are stored in a memory 180.

Here, the travel trajectory is information indicating a trajectory (route) through which the vehicle 100 passes. The route information is information (including road information and the like) regarding a route through which the vehicle 100 passes.

The vehicle control ECU 140 has a CPU as a computer built thereinto, and on the basis of the route information and the vehicle information acquired from the measurement instrument group 160, controls the drive unit 170 such that the vehicle 100 will pass through a route corresponding to the route information. Data to be processed and computer programs to be executed by the vehicle control ECU 140 are stored in a memory 190.

The drive unit 170 is a drive member for driving the vehicle, and includes, for example, a power unit (not shown) such as an engine or a motor that generates energy for rotating tires, a steering unit that controls a traveling direction of the vehicle, and the like. The drive unit 170 further includes a gearbox for rotating the tires by using the energy generated by the power unit, a gear control unit for controlling constituents inside the gearbox, a brake unit for performing a braking operation, and the like.

The vehicle control ECU 140 controls the drive unit 170 and adjusts a drive amount, a braking amount, a steering amount, and the like of the vehicle 100 such that the vehicle will pass through the route corresponding to the route information. Specifically, the vehicle control ECU 140 controls the brake, the steering wheel, the gear constituents, and the like to cause vehicle 100 to travel on the route.

The route generation ECU 130 and the vehicle control ECU 140 may have a common CPU and a common memory. An HMI 240 stands for human machine interface for transmitting information to the driver 101.

The HMI 240 includes a visible display and a display control device that generates information to be displayed on the display if the driver 101 is in a driving position. The HMI 240 also includes a device (speaker system) that outputs sound and a sound control device that generates sound data.

The display control device of the HMI 240 displays navigation information on the display on the basis of the route information generated by the route generation ECU 130. The sound control device of the HMI 240 generates sound data for notifying the driver 101 of the route information on the basis of the route information, and outputs the sound data from the speaker system. The sound data is, for example, data for notifying that the vehicle is approaching an intersection where the vehicle is to turn.

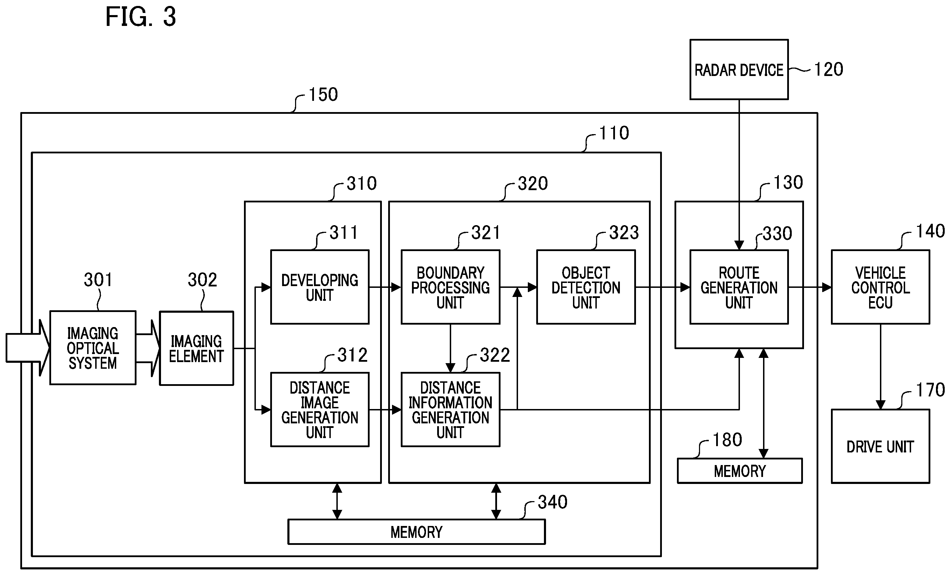

Fig. 3 is a functional block diagram showing a configuration example of the route generation apparatus 150 according to First Embodiment. Some of the functional blocks shown in Fig. 3 are realized by causing a computer included in the route generation apparatus 150 to execute a computer program stored in the memory that is a storage medium.

However, some or all of the functional blocks may be realized by hardware. As hardware, a dedicated circuit (ASIC), a processor (a reconfigurable processor or a DSP), or the like may be used. The functional blocks shown in Fig. 3 do not have to be built into the same casing, and may be configured by separate devices connected to each other via signal paths.

In Fig. 3, the route generation apparatus 150 as an image processing apparatus includes the imaging device 110 and the route generation ECU 130. The imaging device 110 has an imaging optical system 301, an imaging element 302, an image processing unit 310, an object information generation unit 320, and a memory 340.

In First Embodiment, the imaging optical system 301, the imaging element 302, the image processing unit 310, and the object information generation unit 320 are disposed inside a casing (not shown) of the imaging device 110. Here, the imaging element 302 functions as an imaging unit configured to image a subject and generate image information.

The imaging optical system 301 is an imaging lens of the imaging device 110 and has a function of forming an image (optical image) of a subject on the imaging element 302. The imaging optical system 301 includes a plurality of lens groups, and has an exit pupil at a position away from the imaging element 302 by a predetermined distance.

The imaging element 302 includes a complementary metal oxide semiconductor (CMOS) image sensor or a charge-coupled device (CCD) image sensor, and has a distance measurement function based on the imaging surface phase difference ranging method. The imaging element 302 has a plurality of pixel regions having a photoelectric conversion function and arranged two-dimensionally.

Each pixel region has, for example, two photoelectric conversion portions (a first photoelectric conversion portion and a second photoelectric conversion portion) disposed separately in a row direction. For example, any one of R, G, and B color filters and a microlens are disposed in front of each pixel region.

The imaging element 302 photoelectrically converts a subject image formed on the imaging element 302 via the imaging optical system 301 to generate an image signal based on the subject image, and outputs the image signal to the image processing unit 310. The image signal is a signal based on an output value for each photoelectric conversion portion of the pixel region.

The imaging element 302 separately outputs a first image signal based on the signal output from the first photoelectric conversion portion and a second image signal based on the signal output from the second photoelectric conversion portion. Alternatively, an addition signal obtained by adding the first image signal to the second image signal and the first image signal are separately output to the image processing unit 310.

On the basis of the image signals supplied from the imaging element 302, the image processing unit 310 generates image data having information regarding each color of red, green, and blue for each pixel, and distance image data indicating distance information for each pixel.

The image processing unit 310 includes a developing unit 311 that generates image data on the basis of the image signals supplied from the imaging element 302 and a distance image generation unit 312 that generates distance image data on the basis of the image signals supplied from the imaging element 302. The distance image generation unit 312 functions as a distance equivalent information measurement unit configured to detect distance equivalent information for each pixel in image information.

Processes executed by these constituents will be described later. The image processing unit 310 outputs the image data from the developing unit 311 and the distance image data from the distance image generation unit 312 to the object information generation unit 320.

The object information generation unit 320 has a boundary processing unit 321 for detecting a boundary between a plurality of objects in the image. The boundary processing unit 321 divides the image data from the developing unit 311, for example, into strip-shaped rectangular regions (divisional regions) in the vertical direction of the screen, and further detects a boundary on the basis of a color difference signal (or a color signal) for an image signal in each rectangular region.

When a boundary is detected, changes in luminance information may also be referred to. Here, the boundary processing unit 321 functions as a boundary detection unit configured to divide an image into a plurality of divisional regions extending in a predetermined direction and detects a boundary based on at least color information for the image in each divisional region.

In the object information generation unit 320, by detecting a boundary on the basis of the color difference signal for the image signal in each rectangular region, sub-regions separated by the boundaries within the divisional region are classified (grouped) into three groups such as the sky, a road, and others.

The reason why the boundary processing unit detects a boundary on the basis of the color difference signal for each strip-shaped rectangular region as described above is to facilitate detection of the boundary. In First Embodiment, the predetermined direction in which the strip-shaped rectangular regions (divisional regions) extend is a longitudinal direction (vertical direction) of the screen, but may be a lateral direction (horizontal direction) of the screen.

The object information generation unit 320 has a distance information generation unit 322 that determines and assigns distance information to each group. On the basis of the boundary information from the boundary processing unit 321 and the distance image data (distance equivalent information) from the distance image generation unit 312, the distance information generation unit 322 determines and adds object distance information (combined distance equivalent information) indicating the respective distances of, for example, three sub-regions included in the acquired image.

Here, the distance information generation unit 322 functions as an combined distance equivalent information determination unit configured to determine combined distance equivalent information for each sub-region separated by a boundary in the divisional region on the basis of the distance equivalent information of each pixel in the image information.

As described above, in First Embodiment, detection of a boundary is facilitated by detecting the boundary on the basis of a color difference signal for each strip-shaped rectangular region. Since combined distance equivalent information is determined for, for example, three sub-regions separated by boundaries, the influence of a distance error (variation) occurring in the distance image generation unit 312 can be suppressed.

Although a boundary is detected on the basis of a color difference signal in First Embodiment, the boundary may be detected on the basis of a color signal. A boundary of a target may be detected by referring not only to a color difference signal or a color signal but also to a luminance signal.

In particular, if a distance of an object is acquired by using an imaging device based on the imaging surface phase difference method as in First Embodiment, a distance error (variation) may occur for a distant object due to the relatively short baseline length, but the influence thereof can be considerably suppressed.

The object information generation unit 320 has an object detection unit 323 that performs image recognition on an object. The object detection unit 323 combines image signals of the strip-shaped rectangular regions in which boundaries are set by the boundary processing unit 321 in the horizontal direction of an image, and performs image recognition on, for example, the sky, a road, and other objects included in an acquired image on the basis of the combined images.

Here, the object detection unit 323 detects an object by combining images of a plurality of divisional regions including classified sub-regions.

For example, a group at the bottom of the screen is determined as being a road. Here, the object detection unit 323 functions as a classification unit configured to perform predetermined classification according to combined distance equivalent information of a sub-region for which the combined distance equivalent information has been determined. As described above, the object detection unit 323 of First Embodiment classifies sub-regions as one of three categories such as the sky, a road, and others.

The object detection unit 323 refers to the distance information added to each separated region by the distance information generation unit 322 when performing image recognition on the sky, a road, and other objects. In other words, erroneous recognition can be reduced by recognizing objects that are different in distance from each other by a predetermined distance or more as different objects. It becomes easier to recognize that a group of which a distance is infinite in the upper part of the screen is the sky.

By distinguishing between the sky and the road as described above, it is possible to focus on object recognition for objects other than the sky and the road. The object detection unit 323 can accurately generate outside information indicating information regarding the detected sky, road, and other objects. Here, the outside information is information indicating a position of the detected object in the image, a size such as width and a height, a region, and the like of the detected object. The outside information includes information regarding an attribute and an identification number of the detected object.

The object distance information is linked to information regarding the identification number of the object included in the outside information. The object information generation unit 320 outputs the outside information from the object detection unit 323 and the object distance information from the distance information generation unit 322 to the route generation ECU 130.

The image processing unit 310 and the object information generation unit 320 may be configured by one or more processors included in the imaging device 110. The functions of the image processing unit 310 and the object information generation unit 320 may be realized by one or more processors executing programs read from the memory 340.

The route generation ECU 130 includes a route generation unit 330. The route generation unit 330 generates route information on the basis of the outside information, the object distance information, and the distance information acquired from the radar device 120. Next, a structure and control of each block in the route generation apparatus 150 will be described in detail.

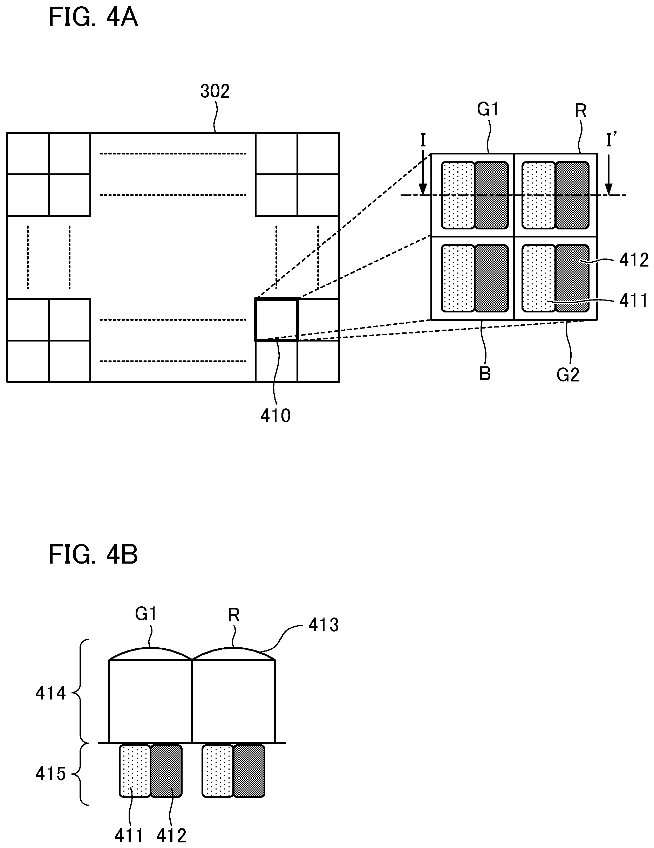

Figs. 4A and 4B are schematic diagrams showing configuration examples of the imaging element 302 according to First Embodiment. Fig. 4A is a top view of the imaging element 302 when viewed from a light incident direction. The imaging element 302 is configured by arranging a plurality of pixel groups 410 of two rows and two columns in a matrix.

The pixel group 410 includes a green pixel G1 and a green pixel G2 that detect green light, a red pixel R that detects red light, and a blue pixel B that detects blue light. In the pixel group 410, the green pixel G1 and the green pixel G2 are disposed diagonally. Each pixel also has a first photoelectric conversion portion 411 and a second photoelectric conversion portion 412.

Fig. 4B is a sectional view of the pixel group 410 taken along the line I-I' in Fig. 4A. Each pixel includes a light guide layer 414 and a light receiving layer 415. The light guide layer 414 includes a microlens 413 for efficiently guiding a light beam incident to the pixel to the light receiving layer 415, a color filter (not shown) for causing light in a wavelength band corresponding to a color of light detected by each pixel to pass therethrough, and wirings for image reading and pixel driving.

The light receiving layer 415 is a photoelectric conversion portion that photoelectrically converts light incident through the light guide layer 414 and outputs the light as an electric signal. The light receiving layer 415 has a first photoelectric conversion portion 411 and a second photoelectric conversion portion 412.

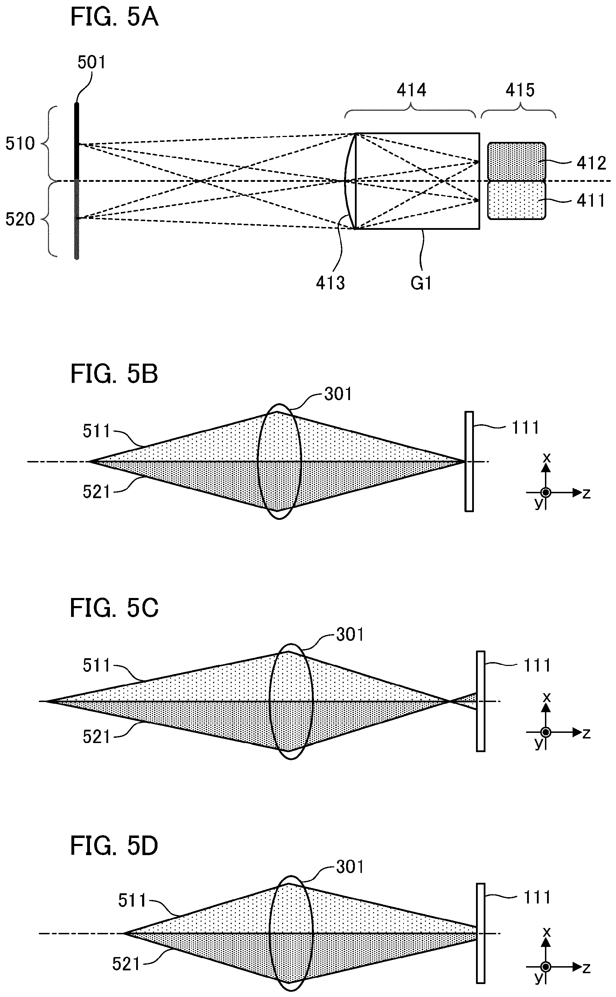

Figs. 5A to 5D are schematic diagrams for describing a relationship between a subject distance and incident light in the imaging surface phase difference method. Fig. 5A is a schematic diagram showing an exit pupil 501 of the imaging optical system 301, the green pixel G1 of the imaging element 302, and light incident to each photoelectric conversion portion of the green pixel G1. The imaging element 302 has a plurality of pixels, but for simplification, one green pixel G1 will be described.

The microlens 413 of the green pixel G1 is disposed such that the exit pupil 501 and the light receiving layer 415 are in an optically conjugate relationship. As a result, a light beam that has passed through a first pupil region 510 that is a partial pupil region of the exit pupil 501 is incident to the first photoelectric conversion portion 411. Similarly, a light beam passing through a second pupil region 520 that is a partial pupil region is incident to the second photoelectric conversion portion 412.

The first photoelectric conversion portion 411 of each pixel photoelectrically converts the received light beam and outputs a signal. A first image signal is generated from signals output from the plurality of first photoelectric conversion portions 411 included in the imaging element 302. The first image signal indicates an intensity distribution of an image (referred to as an A image) formed on the imaging element 302 by a light beam that has mainly passed through the first pupil region 510.

The second photoelectric conversion portion 412 of each pixel photoelectrically converts the received light beam and outputs a signal. A second image signal is generated from signals output from the plurality of second photoelectric conversion portions 412 included in the imaging element 302. The second image signal indicates an intensity distribution of an image (referred to as a B image) formed on the imaging element 302 by a light beam that has mainly passed through the second pupil region 520.

A relative positional deviation amount (hereinafter, referred to as a parallax amount) between the first image signal corresponding to the A image and the second image signal corresponding to the B image is an amount corresponding to a defocus amount. A relationship between the parallax amount and the defocus amount will be described with reference to Figs. 5B, 5C, and 5D.

Figs. 5B, 5C, and 5D are schematic diagrams showing a positional relationship between the imaging element 302 and the imaging optical system 301. The reference numeral 511 in the drawing indicates a first light beam passing through the first pupil region 510, and the reference numeral 521 indicates a second light beam passing through the second pupil region 520.

Fig. 5B shows a state at the time of focusing, in which the first light beam 511 and the second light beam 521 converge on the imaging element 302. In this case, a parallax amount (positional deviation) between the first image signal corresponding to the A image formed by the first light beam 511 and the second image signal corresponding to the B image formed by the second light beam 521 is 0.

Fig. 5C shows a state in which the image side is defocused in the negative direction of the z-axis. In this case, a parallax amount between the first image signal formed by the first light beam 511 and the second image signal formed by the second light beam 521 is not 0 and has a negative value.

Fig. 5D shows a state in which the image side is defocused in the positive direction of the z-axis. In this case, a parallax amount between the first image signal formed by the first light beam 511 and the second image signal formed by the second light beam 521 is not 0 and has a positive value.

From comparison between Figs. 5C and 5D, it can be seen that a direction in which parallax occurs changes depending on whether a defocus amount is positive or negative. It can be seen from a geometric relationship that a parallax amount is generated according to a defocus amount.

Therefore, as will be described later, a parallax amount between the first image signal and the second image signal can be detected according to a region-based matching technique, and the parallax amount can be converted into a defocus amount via a predetermined conversion coefficient. By using an imaging formula for the imaging optical system 301, the defocus amount on the image side can be converted into a distance to an object.

The imaging element 302 may separately output an addition signal (combined signal) of the first image signal and the second image signal, and the first image signal to the image processing unit 310 as described above. In this case, the image processing unit 310 can generate the second image signal from a difference between the addition signal (combined signal) and the first image signal, and can thus acquire the first image signal and the second image signal.

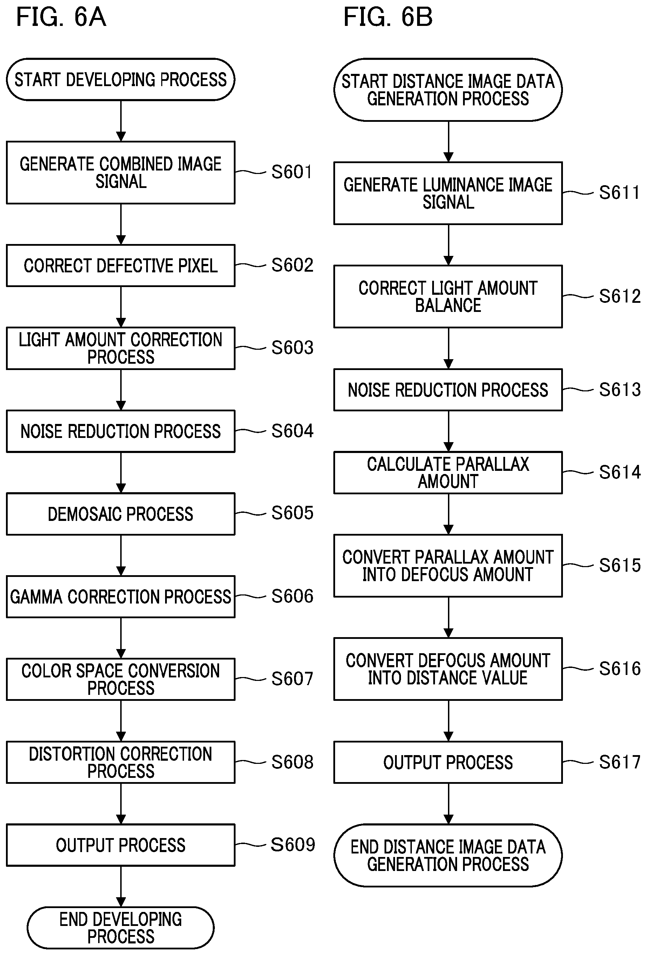

Next, a process performed by the image processing unit 310 will be described. Figs. 6A and 6B are flowcharts illustrating examples of processes executed by the image processing unit 310 according to First Embodiment. An operation in each step of the flowcharts of Figs. 6A and 6B is performed by the CPU as a computer included in the route generation apparatus 150 executing the computer program stored in the memory.

Fig. 6A is a flowchart showing an operation in a developing process in which the developing unit 311 of the image processing unit 310 generates respective pieces of image data from image signals (the first image signal and the second image signal). The developing process is executed in response to receiving an image signal from the imaging element 302.

In step S601, the CPU generates a combined image signal by combining the first image signal and the second image signal input from the imaging element 302. Alternatively, as described above, the addition signal may be read at the stage of reading from the imaging element 302. By combining (adding) the first image signal and the second image signal, it is possible to obtain an image signal based on an image formed by a light beam that has passed through the entire exit pupil 501.

Assuming that a horizontal pixel coordinate of the imaging element 302 is x and a vertical pixel coordinate is y, a combined image signal Im(x,y) of the pixel (x,y) may be represented by the following Expression 1 by using a first image signal Im1(x,y) and a second image signal Im2(x,y).

$$Im(x, \ y) = Im1(x, \ y) + Im2(x, \ y)$$

... (Expression 1)

In step S602, the developing unit 311 executes a correction process for a defective pixel in the combined image signal. The defective pixel is a pixel that cannot output a normal signal in the imaging element 302. Coordinates of the defective pixel are stored in the memory in advance, and the developing unit 311 acquires information indicating the coordinates of the defective pixel of the imaging element 302 from the memory.

The developing unit 311 generates a combined image signal of the defective pixel by using a median filter that replaces the combined image signal with a median value of pixels surrounding the defective pixel. As a method of correcting the combined image signal of the defective pixel, a signal value of the defective pixel may be generated by using and interpolating signal values of the pixels surrounding the defective pixel by using coordinate information of the defective pixel prepared in advance.

In step S603, the developing unit 311 applies a light amount correction process of correcting a reduction in an amount of light around an angle of view caused by the imaging optical system 301 to the combined image signal. The light amount reduction characteristics (relative light amount ratio) around the angle of view caused by the imaging optical system 301 are measured in advance and stored in the memory.

As a method of correcting an amount of light, a relative light amount ratio between angles of view stored in advance may be read from the memory, and an amount of light may be corrected by multiplying the combined image signal by a gain that makes the light amount ratio constant. For example, the developing unit 311 corrects an amount of light by multiplying a combined image signal of each pixel by a gain that increases from the central pixel of the imaging element 302 toward the peripheral pixels.

In step S604, the developing unit 311 performs a noise reduction process on the combined image signal. As a method for reducing noise, noise reduction using a Gaussian filter may be used.

In step S605, the developing unit 311 performs a demosaic process on the combined image signal to acquire red (R), green (G), and blue (B) signals for each pixel, and uses the color signals to generate image data with luminance information for each pixel. As a demosaicing method, a method of interpolating color information for each pixel by using linear interpolation for each color channel may be used.

In step S606, the developing unit 311 performs grayscale correction (gamma correction process) by using a predetermined gamma value. Image data Idc(x,y) of the pixel (x,y) after grayscale correction is represented as in the following Expression 2 by using image data Id(x,y) of the pixel (x,y) before grayscale correction and a gamma value $\gamma$.

$$Idc(x, \ y) = Id(x, \ y)^{\gamma}$$

... (Expression 2)

A value prepared in advance may be used as the gamma value $\gamma$. The gamma value $\gamma$ may be determined according to a pixel position. For example, the gamma value $\gamma$ may be changed for each region obtained by dividing the effective region of the imaging element 302 by a predetermined number of divisions.

In step S607, the developing unit 311 executes a color space conversion process of converting a color space of the image data from an RGB color space to a YUV color space. The developing unit 311 converts the image data corresponding to the luminance of each color of red, green, and blue into a luminance value and a color difference value by using a predetermined coefficient and a color space conversion expression (Expression 3) to convert the color space of the image data from the RGB color space to the YUV color space.

$$Y(x, y) = ry \times IdcR(x, y) + gy \times IdcG(x, y) + by \times IdcB(x, y)$$

$$U(x, y) = ru \times IdcR(x, y) + gu \times IdcG(x, y) + bu \times IdcB(x, y)$$

$$V(x, y) = rv \times IdcR(x, y) + gv \times IdcG(x, y) + bv \times IdcB(x, y)$$

... (Expression 3)

In Expression 3, IdcR(x,y) indicates red image data value of the pixel (x,y) after grayscale correction. IdcG(x,y) indicates green image data value of the pixel (x,y) after grayscale correction.

IdcB(x,y) indicates blue image data value of the pixel (x,y) after grayscale correction. Y(x,y) indicates a luminance value of the pixel (x,y) obtained through color space conversion. U(x,y) indicates a difference (color difference value) between the luminance value of the pixel (x,y) obtained through color space conversion and a blue component.

V(x,y) indicates a difference (color difference value) between the luminance value of the pixel (x,y) obtained through color space conversion and a red component. Coefficients (ry, gy, gy) are coefficients for obtaining Y(x,y), and coefficients (ru, gu, gu) and (rv, gv, bv) are coefficients for calculating color difference values.

In step S608, the developing unit 311 executes correction (distortion correction) for suppressing the influence of distortion aberration caused by the optical characteristics of the imaging optical system 301 on the converted image data. The distortion aberration correction process is performed by geometrically transforming the image data to correct a distortion ratio of the imaging optical system 301.

Geometric deformation is performed by using a polynomial that generates a pixel position before correction from a correct pixel position without distortion aberration. If the pixel position before correction is a decimal number, the nearest pixel may be used after rounding, or linear interpolation may be used.

In step S609, the developing unit 311 outputs the image data to which the distortion aberration correction processing has been applied to the object information generation unit 320. With this, the developing process executed by the developing unit 311 is ended. The flow in Fig. 6A is periodically repeated until a user issues an end instruction (not shown).

As long as the boundary processing unit 321 or the object detection unit 323 can perform a boundary detection process or an external world recognition process on the basis of image data before various correction processes obtained from the imaging element 302, the developing unit 311 does not have to execute any process in Fig. 6A.

For example, as long as the boundary processing unit 321 or the object detection unit 323 can detect a boundary or an object within an imaging angle of view on the basis of image data to which the distortion aberration correction process in step S608 is not applied, the process in step S608 may be omitted from the developing process in Fig. 6A.

Fig. 6B is a flowchart showing an operation in a distance image data generation process performed by the distance image generation unit 312. Here, the distance image data is data in which each pixel is associated with distance information corresponding to a distance from the imaging device 110 to a subject.

The distance information may be a distance value D, or may be a defocus amount $\Delta L$ or a parallax amount d used to calculate the distance value, but in First Embodiment, the distance image data will be described as data in which each pixel is associated with the distance value D.

In step S611, the distance image generation unit 312 generates first and second luminance image signals from input image signals. That is, the distance image generation unit 312 generates the first luminance image signal by using the first image signal corresponding to the A image, and generates the second luminance image signal by using the second image signal corresponding to the B image.

In this case, the distance image generation unit 312 multiplies image signal values of the red, green, and blue pixels of each pixel group 410 by predetermined coefficients, respectively, and combines the image signal values to generate a luminance image signal. The distance image generation unit 312 may generate a luminance image signal by performing a demosaic process using linear interpolation, and then multiplying red, green, and blue pixel signals by predetermined coefficients and combining the pixel signals.

In step S612, the distance image generation unit 312 corrects a light amount balance between the first luminance image signal and the second luminance image signal. Correction of the light amount balance is executed by multiplying at least one of the first luminance image signal and the second luminance image signal by a predetermined correction coefficient.

It is assumed that a luminance ratio between the first luminance image signal and the second luminance image signal obtained by applying uniform illumination after adjusting positions of the imaging optical system 301 and the imaging element 302 is measured, and the correction coefficient is calculated in advance such that the luminance ratio is constant and is stored in the memory 340.

The distance image generation unit 312 multiplies at least one of the first luminance image signal and the second luminance image signal by the correction coefficient read from the memory to generate the first image signal and the second image signal to which the light amount balance correction has been applied.

In step S613, the distance image generation unit 312 performs a noise reduction process on the first luminance image signal and the second luminance image signal to which the light amount balance correction is applied. The distance image generation unit 312 applies a low-pass filter that reduces a high spatial frequency band to each luminance image signal to execute the noise reduction process.

The distance image generation unit 312 may use a bandpass filter through which a predetermined spatial frequency band is transmitted. In this case, an effect of reducing the influence of a correction error in the light amount balance correction performed in step S612 can be achieved.

In step S614, the distance image generation unit 312 calculates a parallax amount that is an amount of a relative positional deviation between the first luminance image signal and the second luminance image signal. The distance image generation unit 312 sets a point of interest in a first luminance image corresponding to the first luminance image signal, and sets a collation region centering on the point of interest. Next, the distance image generation unit 312 sets a reference point in a second luminance image corresponding to the second luminance image signal, and sets a reference region centered on the reference point.

The distance image generation unit 312 calculates the degree of correlation between a first luminance image included in the collation region and a second luminance image included in the reference region while sequentially moving the reference point, and sets the reference point having the highest correlation as a corresponding point.

The distance image generation unit 312 uses an amount of a relative positional deviation between the point of interest and the corresponding point as a parallax amount at the point of interest. The distance image generation unit 312 can calculate parallax amounts at a plurality of pixel positions by calculating a parallax amount while sequentially moving the point of interest. The distance image generation unit 312 specifies a value indicating a parallax value for each pixel as described above, and generates parallax image data that is data indicating a parallax distribution.

A well-known method may be used as a method of calculating the degree of correlation used for the distance image generation unit 312 to obtain a parallax amount. The distance image generation unit 312 may use, for example, a method called normalized cross-correlation (NCC) for evaluating normalized cross-correlation between luminance images.

The distance image generation unit 312 may use a method of evaluating the degree of dissimilarity as the degree of correlation. The distance image generation unit 312 may use, for example, sum of absolute difference (SAD) for evaluating a sum of absolute values of differences between luminance images, or sum of squared difference (SSD) for evaluating a sum of squared differences.

In step S615, the distance image generation unit 312 converts the parallax amount of each pixel in the parallax image data into a defocus amount, and acquires the defocus amount of each pixel. The distance image generation unit 312 generates defocus image data indicating the defocus amount of each pixel on the basis of the parallax amount of each pixel in the parallax image data.

The distance image generation unit 312 uses the parallax amount d(x,y) and the conversion coefficient K(x,y) of the pixel (x.y) in the parallax image data to calculate the defocus amount $\Delta L(x,y)$ of the pixel (x,y) from the following Expression 4. In the imaging optical system 301, the first light beam 511 and the second light beam 521 are partly cut at peripheral angles of view due to vignetting. Therefore, the conversion coefficient K is a value that depends on an angle of view (pixel position).

$$\Delta L(x,\ y) = K(x,\ y) \times d(x,\ y)$$

$$\ldots \text{(Expression 4)}$$

If the imaging optical system 301 has field curvature characteristics in which a focal position changes between the central angle of view and the peripheral angle of view, when a field curvature amount is denoted by Cf, the parallax amount d(x,y) can be converted into the defocus amount $\Delta L(x,y)$ by using the following Expression 5.

After alignment of the imaging optical system 301 and the imaging element 302, a relationship between a parallax amount and a distance value to an object is acquired by imaging a chart, so that the conversion coefficient K and the field curvature amount Cf can be acquired. In this case, the field curvature amount Cf depends on an angle of view and is given as a function of a pixel position.

$$\Delta L(x,\ y) = K(x,\ y) \times d(x,\ y) \times Cf(x,\ y)$$

... (Expression 5)

In step S616, the distance image generation unit 312 converts the defocus amount $\Delta L(x,y)$ of the pixel $(x,y)$ into the distance value $D(x,y)$ to the object at the pixel $(x,y)$ to generate distance image data. The defocus amount $\Delta L$ is converted by using an imaging relationship of the imaging optical system 301, and thus the distance value D to the object can be calculated.

When a focal length of the imaging optical system 301 is denoted by f, and a distance from an image-side principal point to the imaging element 302 is denoted by Ipp, the defocus amount $\Delta L(x,y)$ may be converted into the distance value $D(x,y)$ to the object by using the imaging formula in the following Expression 6.

$$D(x,\ y) = \cfrac{1}{\left\{ \dfrac{1}{f} - \dfrac{1}{(Ipp + \Delta L(x,\ y))} \right\}}$$

... (Expression 6)

The focal length f and the distance Ipp from the image-side principal point to the imaging element 302 are constant values regardless of an angle of view, but the present invention is not limited to this. If an imaging magnification of the imaging optical system 301 changes greatly for each angle of view, at least one of the focal length f and the distance Ipp from the image-side principal point to the imaging element 302 may be set to a value that changes for each angle of view.

In step S617, the distance image generation unit 312 outputs the distance image data generated as described above to the object information generation unit 320. Here, through the processes in steps S611 to S617, the distance image generation unit 312 measures distance equivalent information for each pixel according to the phase difference ranging method on the basis of signals from the first photoelectric conversion portion and the second photoelectric conversion portion disposed in a pixel of the imaging unit.

In order to acquire the distance equivalent information, the distance equivalent information may be measured according to the phase difference ranging method on the basis of two image signals from a stereo camera. With this, the distance image data generation process executed by the distance image generation unit 312 is ended. The flow in Fig. 6B is periodically repeated until a user issues an end instruction (not shown).

The parallax amount d for each pixel, the defocus amount $\Delta L$, and the distance value D from the principal point of the imaging optical system 301 are values that can be converted by using the above-described coefficients and conversion formulas. Therefore, each pixel may include information representing the parallax amount d or the defocus amount $\Delta L$ as the distance image data generated by the distance image generation unit 312.

Considering that the object information generation unit 320 calculates a representative value of the distance values D included in an object region, it is desirable to generate the distance image data on the basis of a defocus amount at which a frequency distribution is symmetrical.

As described above, in the process of calculating a parallax amount in step S614, a correlation between the first luminance image and the second luminance image is used to search for a corresponding point. However, if the first image signal contains a lot of noise (for example, noise caused by light shot noise) or if a change in a signal value of a luminance image signal included in a collation region is small, the degree of correlation cannot be evaluated correctly.

In such a case, a parallax amount with a large error may be calculated with respect to a correct parallax amount. If a parallax error is large, an error of the distance value D generated in step S616 is also large.

Therefore, the distance image data generation process performed by the distance image generation unit 312 may include a reliability calculation process for calculating the reliability of a parallax amount (parallax reliability). The parallax reliability is an index indicating to what extent an error is included in a calculated parallax amount.

For example, a ratio of a standard deviation to an average value of signal values included in a collation region may be evaluated as the parallax reliability. If a change in the signal value (so-called contrast) in the collation region is large, the standard deviation increases. If an amount of light incident to a pixel is large, an average value is great. If an amount of light incident to a pixel is large, optical shot noise is large. That is, the average value has a positive correlation with an amount of noise.

A ratio of the average value to the standard deviation (standard deviation/average value) corresponds to a ratio between a magnitude of contrast and an amount of noise. If the contrast is sufficiently large with respect to the amount of noise, it can be estimated that an error in calculating a parallax amount is small. That is, it can be said that as the parallax reliability becomes larger, an error in the calculated parallax amount becomes smaller, and a parallax amount becomes more accurate.

The reliability may be lowered for a pixel with a saturated pixel signal and peripheral pixels thereof. For example, even if there is contrast in the vicinity of a saturated pixel, the texture may not be detected correctly between a standard image and a reference image, and the parallax may not be calculated correctly. Therefore, a pixel signal has a predetermined value or more (saturated), the parallax reliability may be lowered for the periphery of the pixel.

Therefore, in step S614, it is possible to calculate the parallax reliability at each point of interest and generate reliability data representing the likelihood of a distance value for each pixel forming distance image data. The distance image generation unit 312 may output the reliability data to the object information generation unit 320.

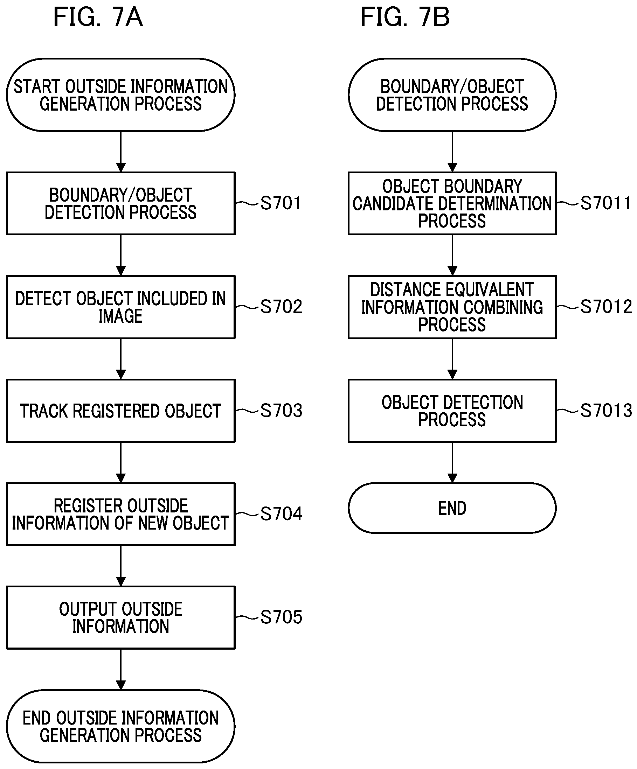

Next, a process in which the object information generation unit 320 generates outside information and object distance information on the basis of image data and distance image data will be described with reference to Figs. 7A and 7B.

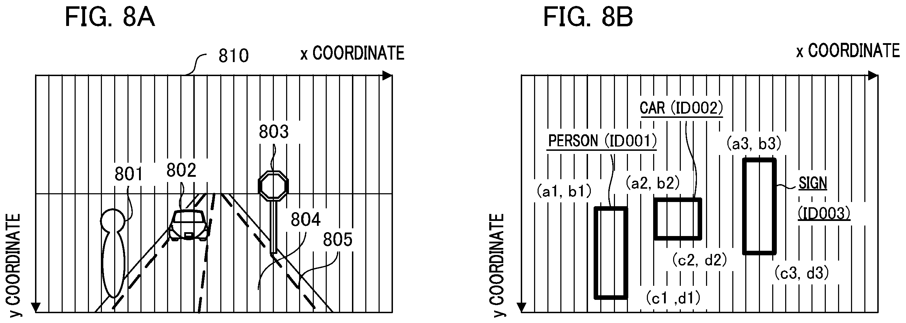

Figs. 7A and 7B are flowcharts showing examples of processes executed by the boundary processing unit 321 and the object detection unit 323 according to First Embodiment. Figs. 8A to 8E are schematic diagrams showing examples of images and information in processing examples performed by the object information generation unit 320 according to First Embodiment.

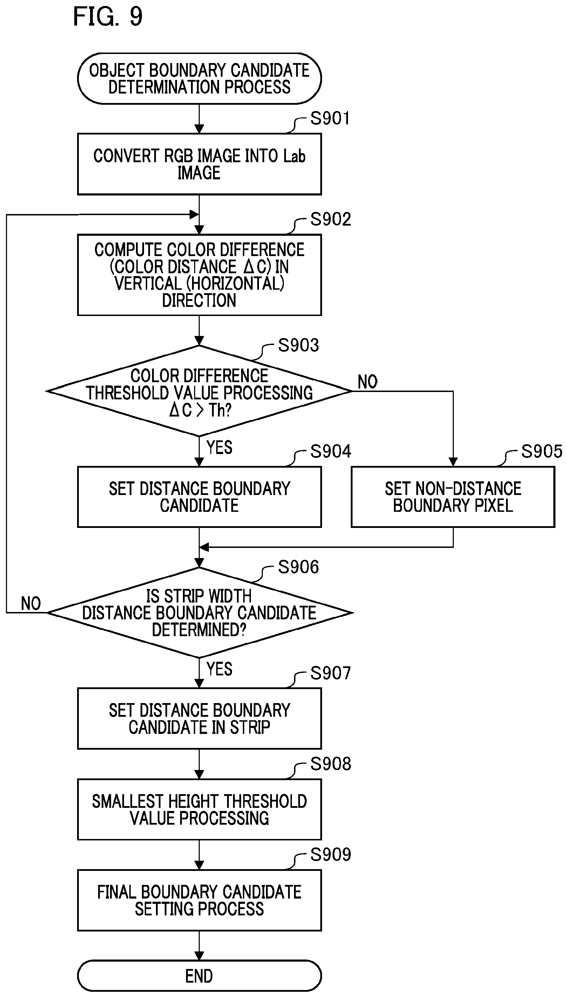

An operation in each step in the flowcharts of Figs. 7A and 7B is performed by the CPU as a computer included in the route generation apparatus 150 executing the computer program stored in the memory. An operation in each step in the flowcharts of Figs. 9 to 14, which will be described later, is also performed by the CPU as a computer included in the route generation apparatus 150 executing the computer program stored in the memory.

Fig. 7A is a flowchart showing a processing example in which a boundary is generated within a strip-shaped rectangular region by the boundary processing unit 321 and objects are classified into, for example, the sky, a road, and other objects. In a boundary/object detection process in step S701, the boundary processing unit 321 divides image data from the developing unit 311 into strip-shaped rectangular regions in the vertical direction of the screen, for example.

Fig. 8A is a diagram for describing an example in which an image 810 based on image data that is acquired by the imaging device 110 and input to the object information generation unit 320 is divided into strip-shaped rectangular regions in the vertical direction of the screen by the boundary processing unit 321. In Fig. 8A, the image 810 includes a person 801, a vehicle 802, a sign 803, a road 804 and a lane 805.

As shown in Fig. 8A, in First Embodiment, color boundaries are detected in a state in which the image 810 is divided into strip-shaped rectangular regions in the vertical direction of the screen, but a width of a strip-shaped rectangular region is not limited to the example shown in Fig. 8A. In First Embodiment, screens shown in Figs. 8A to 8E are displayed, for example, on a display unit (not shown) inside the vehicle, but, in this case, strip-shaped rectangular regions do not have to be displayed.

The boundary processing unit 321 further detects a boundary on the basis of a color difference signal (or a color signal) for the image within each strip-shaped rectangular region. Fig. 7B is a flowchart for describing the boundary/object detection process performed by the boundary processing unit 321 in step S701.

As shown in Fig. 7B, in the boundary/object detection process in step S701, first, the boundary processing unit 321 performs an object boundary candidate determination process in step S7011. Next, a distance equivalent information combining process is performed by the distance information generation unit 322 in step S7012.

In step S7013, the object detection unit 323 performs an object detection process within the strip-shaped rectangular region. The object detection process in step S7013 is a process for classifying the inside of the strip-shaped rectangular region into the sky, a road, and other objects.

Fig. 9 is a flowchart showing a specific example of the object boundary candidate determination process in step S7011 in Fig. 7B performed by the boundary processing unit 321, in which an RGB image is converted into a Lab image by the boundary processing unit 321 in step S901. Next, in step S902, the boundary processing unit 321 computes an amount of change in color difference in the vertical (horizontal) direction of the screen.

Specifically, for example, a color distance (amount of color change) $\Delta C$ between two pixels separated by several pixels in the vertical direction of the screen is computed for each pixel sequentially from the upper end of the screen. In step S903, it is determined whether $\Delta C$ is more than a predetermined threshold value Th. If Yes, a pixel is set as a distance boundary candidate in step S904. That is, a pixel with a large color change is set as a boundary candidate. That is, a position where the color information changes more than the predetermined threshold value Th is detected as a boundary.

Each strip-shaped rectangular region (divisional region) has a width in a direction (horizontal direction) that intersects the vertical direction (predetermined direction), and has a plurality of pixels in the intersecting direction (horizontal direction). Therefore, the above color information means a representative value obtained on the basis of color information of a plurality of pixels arranged in the horizontal direction. Here, the representative value is calculated by using a median value, an average value, or the like.

On the other hand, if No in step S903, a pixel is set as a non-distance boundary pixel in step S905. In other words, the setting is such that a pixel with a small amount of color change is not a boundary.

In step S906, it is determined whether setting of distance boundary candidates or non-distance boundary candidates has been completed for all pixels in the strip-shaped rectangular region. If No, the flow returns to step S902, and the processes in steps S902 to S906 are repeatedly performed.

If Yes in step S906, in step S907, the distance boundary candidate pixel is provisionally set as a distance boundary. Next, in step S908, if an interval between the distance boundaries is equal to or less than a predetermined value (for example, ten pixels), the boundary setting for that pixel is cancelled.

In step S909, a final distance boundary where the pixels are separated from each other by a predetermined value or more is set. As described above, steps S901 to S909 function as a boundary detection step of dividing the image information into a plurality of divisional regions extending in a predetermined direction, and detecting a boundary based on at least color information for an image in each divisional region.

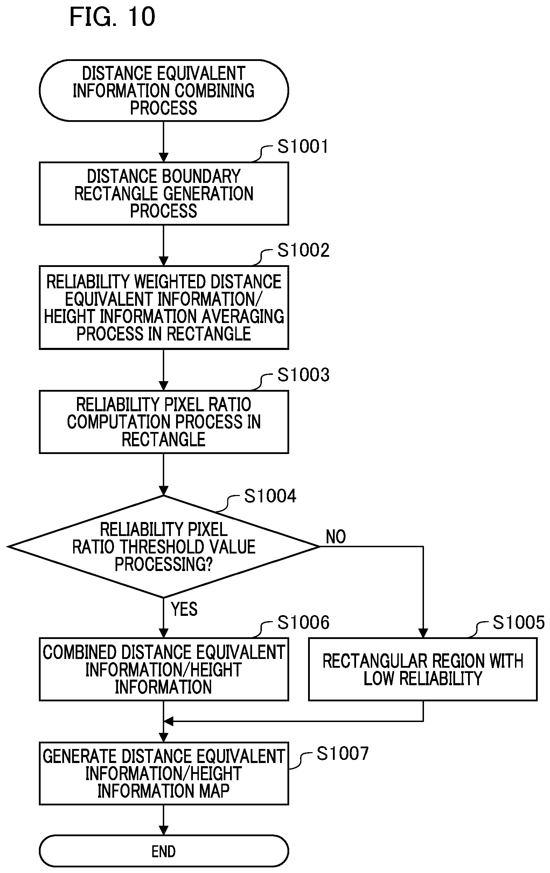

Fig. 10 is a flowchart showing a detailed example of the distance equivalent information combining process in step 7012 in Fig. 7B by the distance information generation unit 322, in which, first, in step S1001, a distance boundary rectangle generation process is performed. Specifically, a distance boundary rectangle having substantially the same color, surrounded by the distance boundary and the width of the strip-shaped rectangular region, is generated.

In step S 1002, distance information of each pixel within the distance boundary rectangle is weighted on the basis of the reliability to generate distance equivalent information for each distance boundary rectangle (hereinafter, also referred to as a sub-region). In this case, a reliability representing the likelihood of the distance equivalent information of each pixel may be generated on the basis of the color information, and combined distance equivalent information for each sub-region may be determined on the basis of the distance equivalent information of each pixel that is weighted on the basis of the reliability.

In that case, parallax amounts of a plurality of images obtained from the imaging element are calculated on the basis of the color information, a parallax reliability indicating the likelihood of the parallax amount of each pixel is calculated on the basis of the color information, and the above reliability is generated on the basis of the parallax reliability. In this case, the parallax reliability of pixels in which a luminance value of a plurality of images is equal to or greater than a predetermined value may be calculated to be lower than the parallax reliability of pixels in which a luminance value of the plurality of images is smaller than the predetermined value.

Average height information for each distance boundary rectangle is generated by averaging the heights of pixels within the distance boundary rectangle. The distance equivalent information may be, for example, a median value or a most frequent value of distance information of pixels of which a distance information reliability is equal to or more than a predetermined value in the distance boundary rectangle.

Next, in step S1003, a ratio of pixels of which the distance information reliability is equal to or more than a predetermined value in each distance boundary rectangle is calculated. Alternatively, a statistic value of distance equivalent information or height information (for example, a ratio of pixels below the standard deviation) is calculated for each distance boundary rectangle.

Next, in step S1004, it is determined whether or not the ratio of pixels of which the reliability of distance information is equal to or more than a predetermined value is equal to or higher than a predetermined ratio. If the result is No, in step S 1005, information indicating that the reliability of the distance boundary rectangle is low is added to the distance boundary rectangle. On the other hand, if Yes in step S 1004, combined distance equivalent information and height information are determined and added to the distance boundary rectangle.

In step S1007, a map having the combined distance equivalent information and the height information is generated for each distance boundary rectangle. Here, steps S1001 to S1007 function as an combined distance equivalent information determination step of determining combined distance equivalent information for each sub-region separated by a boundary in the divisional region on the basis of the distance equivalent information of each pixel in the image information.

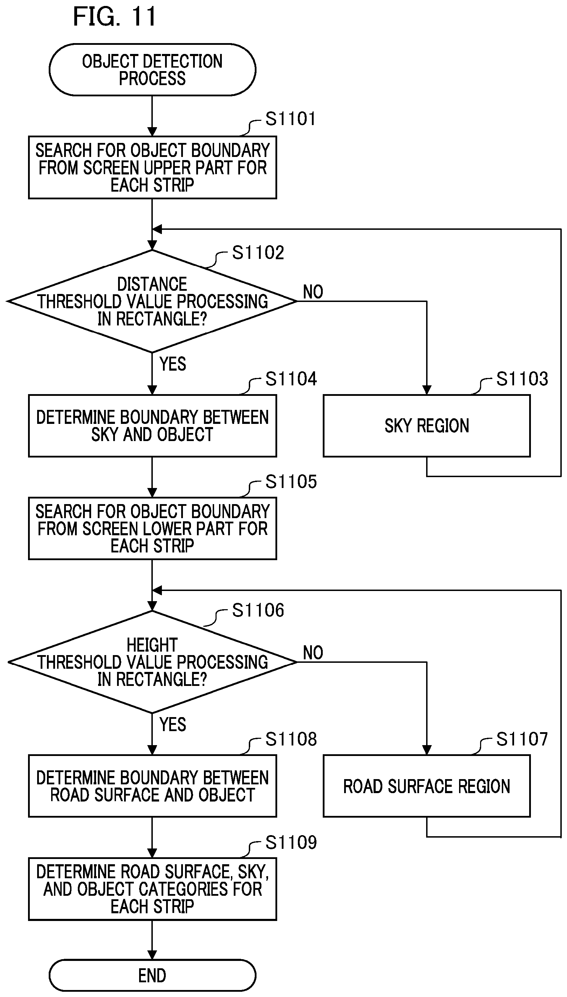

Fig. 11 is a flowchart showing a detailed example of the object detection process performed by the object detection unit 323 in step 7012 in Fig. 7B, in which, in step S1101, an object boundary is searched for from the screen upper end for each strip-shaped rectangular region. In step S1102, distance value processing within the strip-shaped rectangular region is performed.

Specifically, whether or not the distance is shorter than a distance equivalent to infinity (which may be a predetermined value) is compared with the distance equivalent information within the distance boundary rectangle. If No, a sky region is set in step S1103, and the process returns to step S1102 to continue to determine whether each distance boundary rectangle is the sky, a road, or other objects in sequence from the upper end of the screen.

If Yes in step S1102, the sky region searched for from the upper end of the screen is cut off and enters another object region. Therefore, in step S1104, the pixel is determined as being a boundary between the sky and an object.

Next, in step S1105, an object boundary is searched for from the pixels at the lower end of the strip-shaped rectangular region. In step S 1106, for example, average height information of the distance boundary rectangle is compared with a predetermined threshold value. That is, it is determined whether or not a height of the distance boundary rectangle is larger than, for example, a height of a camera installed in the vehicle as a predetermined threshold value.

As the predetermined threshold value, instead of a height of a camera, for example, a median value of height information of pixels in the lower half of the screen may be used. This is because there is a high possibility that the lower half of the screen is occupied by a road.

If No in step S1106, the distance boundary rectangle is lower than the camera position, and thus is set as a road region in step S1107, and the process returns to step S1106 to continue searching from the bottom to the top of the screen. On the other hand, if Yes in step S1106, the distance boundary rectangle is set as a boundary between the road and other objects in step S1108.

In step S1109, for each strip-shaped rectangular region, the distance boundary rectangles in the strip-shaped rectangular region are classified into three categories such as a road, the sky, and other objects. Here, steps S1101 to S1109 function as a classification step of performing predetermined classification according to combined distance equivalent information of sub-regions for which the combined distance equivalent information has been determined. In the embodiment, classification is performed by referring to a height of a sub-region as well.

As described above, for each strip-shaped rectangular region, distance boundary rectangles in the strip-shaped rectangular region are classified into three categories such as a road, the sky, and other objects. After that, in step S702 in Fig. 7A, the object detection unit 323 combines the strip-shaped rectangular regions in the horizontal direction to detect an object.

As described above, since the sky, a road, and other objects are classified in advance for each strip-shaped rectangular region, when the strip-shaped rectangular regions are combined in the horizontal direction and object detection is performed, object recognition can be intensively performed on objects other than the sky and a road. Therefore, a load in the image recognition process can be reduced. The object detection unit 323 can accurately generate outside information indicating information regarding the detected sky, road, or other objects.

When object detection is performed, the object detection unit 323 may perform a process of enlarging or reducing a size of image data input from the image processing unit 310 to a size determined from the detection performance and processing time in the object detection process.

The object detection unit 323 generates outside information indicating a position in an image of an object included in the image based on the image data, a size such as a width or a height, region information indicating a region, the type (attribute) of the object, and an identification number (ID number) of the object.

The identification number is identification information for identifying the detected object and is not limited to numbers. The object detection unit 323 detects the type of object existing within the imaging angle of view of the imaging device 110, a position and a size of the object in the image, determines whether the object has already been registered, and adds an identification number to the object.

The object detection unit 323 detects objects from the image 810 and generates outside information indicating the type, an identification number, and region information of each object. Fig. 8B is a schematic diagram showing the outside information of each object detected from the image 810 at each position in the image 810 on the xy coordinate plane. Although strip-shaped rectangular regions are displayed in Figs. 8A to 8E, the strip-shaped rectangular regions do not have to be displayed on the screen of the display unit (not shown).

The outside information is generated as a table as shown in Table 1, for example. In the outside information, an object region is defined as a rectangular frame (object frame) surrounding the object. In the outside information, the object region information indicates a shape of a rectangular object frame as upper left coordinates (x0, y0) and lower right coordinates (x1, y1).

... (Table 1)

| Identification Number | Type | Upper Left Coordinates (x0,y0) | Lower Right Coordinates (x1,y1) |
|---|---|---|---|
| ID 001 | Person | (a1,b1) | (c1,d1) |
| ID 002 | Passenger Car | (a2,b2) | (c2,d2) |
| ID 003 | Sign | (a3,b3) | (c3,d3) |

In step S702, the object detection unit 323 combines the strip-shaped rectangular regions in the horizontal direction, then executes a process of detecting an object included in the image based on the image data, and detects a region corresponding to the object in the image and the type of the object. The object detection unit 323 may detect a plurality of objects from one image. In this case, the object detection unit 323 specifies the types and regions of the plurality of detected objects.

The object detection unit 323 generates a position and a size (a horizontal width and a vertical height) of the region in the image where the object is detected, and the type of the object as outside information. The types of objects that can be detected by the object detection unit 323 are, for example, vehicles (passenger cars, buses, and trucks), people, animals, motorcycles, and signs.

The object detection unit 323 detects an object and identifies the type of the detected object by comparing a predetermined outline pattern associated with the type of the object in advance with the outline of the object in the image. Although the types of objects detectable by the object detection unit 323 are not limited to those described above, it is desirable from the viewpoint of processing speed to narrow down the number of types of objects to be detected according to a traveling environment of the vehicle 100.

In step S703, the object detection unit 323 tracks an object of which an identification number has already been registered. The object detection unit 323 specifies an object of which an identification number has already been registered among the objects detected in step S702.

An object of which an identification number has been registered is, for example, an object that was detected in the previous object detection process and assigned an identification number. If an object of which an identification number is registered is detected, the object detection unit 323 associates the outside information corresponding to the identification number with information regarding the type and the region of the object acquired in step S702 (updates the outside information).

If it is determined that there is no object of which an identification number is registered in the image information, the object associated with the identification number is considered to have moved (lost) outside the imaging angle of view of the imaging device 110, and tracking of the object is stopped.

In step S704, the object detection unit 323 determines whether each of the objects detected in step S702 is a new object of which an identification number has not been registered. A new identification number is assigned to outside information indicating the type and a region of the object determined as being a new object, and is registered in the outside information.

In step S705, the object detection unit 323 outputs the generated outside information to the route generation apparatus 150 together with information representing time. Thus, the outside information generation process executed by the object detection unit 323 is ended. However, the flow in Fig. 7A is periodically repeated until a user issues an end instruction (not shown).

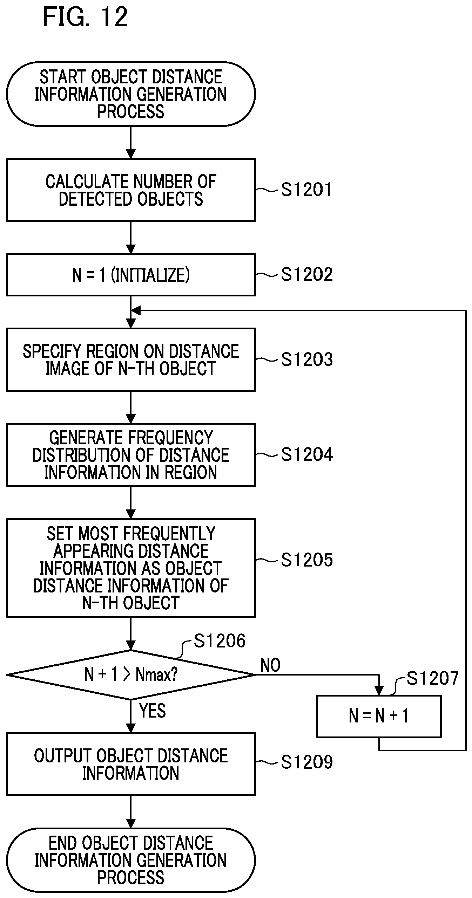

Fig. 12 is a flowchart showing an example of a distance information generation process for each object performed by the distance information generation unit 322. The distance information generation unit 322 generates object distance information representing a distance value for each detected object on the basis of the outside information and the distance image data.

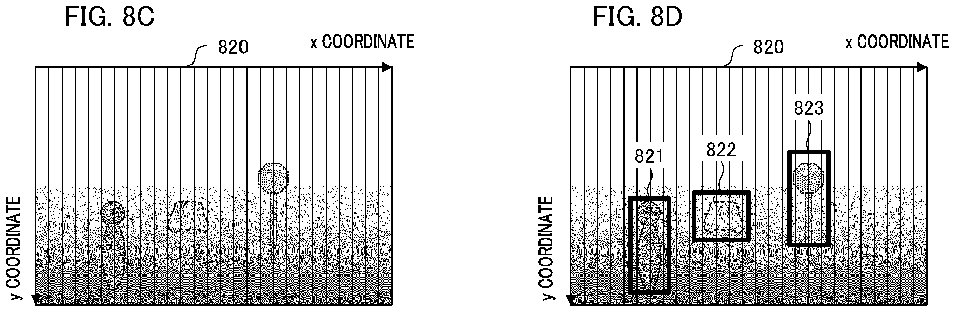

Fig. 8C is a diagram showing an example of a distance image 820 in which the distance image data is associated with the image 810, generated on the basis of the image data in Fig. 8A. In the distance image 820 in Fig. 8C, the distance information is indicated by the shade of color, with darker colors indicating closer distances and lighter colors indicating farther distances.

In step S1201, the distance information generation unit 322 counts the number N of objects detected by the object detection unit 323, and calculates the number of detected objects Nmax that is a total number of detected objects.

In step S1202, the distance information generation unit 322 sets N to 1 (initialization process). The processes in and after step S1203 are sequentially executed for each object indicated in the outside information. It is assumed that the processes from step S1203 to step S1206 are executed in ascending order of the identification number in the outside information.

In step S1203, the distance information generation unit 322 specifies a rectangular region on the distance image 820 corresponding to the region (object frame) on the image 810 of the N-th object included in the outside information. The distance information generation unit 322 sets a frame (object frame) indicating the outline of the corresponding region on the distance image 820.

Fig. 8D is a schematic diagram in which a frame indicating the outline of the region set in the range image 820 is superimposed on each object detected from the image 810. As shown in Fig. 8D, the distance information generation unit 322 creates an object frame 821 corresponding to a person 801, an object frame 822 corresponding to a vehicle 802, and an object frame 823 corresponding to a sign 803 on the distance image 820.

In step S 1204, the distance information generation unit 322 generates a frequency distribution of distance information of pixels included in the rectangular region of the distance image 820 corresponding to the N-th object. If the information associated with each pixel of the distance image data is the distance value D, a section of the frequency distribution is set such that reciprocals of distances are equally spaced.

If each pixel of the distance image data is associated with a defocus amount or a parallax amount, it is desirable to divide the section of the frequency distribution at equal intervals.

In step S1205, the distance information generation unit 322 sets distance information that appears most frequently from the frequency distribution as object distance information indicating a distance of the N-th object.

As the object distance information, an average value of the distance values included in the region may be calculated and used. An average weighted by using the reliability data may be used when calculating an average value. By setting a larger weight for each pixel as the reliability of a distance value increases, a distance value of an object can be calculated with higher accuracy.

The object distance information is preferably information indicating a distance from a predetermined position of the vehicle 100 to an object in order to facilitate route generation in a route generation process that will be described later. If the distance value D is used as the distance information, since the distance value D indicates a distance from the imaging element 302 to an object, the object distance information may be information indicating a distance from a predetermined position (for example, the front end) of the vehicle 100 to the object, obtained by offsetting the most frequent value by a predetermined amount.

If the defocus amount $\Delta L$ is used as the distance information, the defocus amount is converted into a distance from the imaging element 302 by using Expression 6, and is then offset by a predetermined amount to obtain information indicating a distance from a predetermined position of the vehicle 100 to an object.

In step S 1206, the distance information generation unit 322 determines whether N+1 is greater than the number of detected objects Nmax. If N+1 is smaller than the number of detected objects Nmax (No in step S 1206), the distance information generation unit 322 sets N to N+1 in step S 1207, and the process returns to step S 1203.

That is, object distance information is extracted for the next object (the N+1th object). If N+1 is greater than the number of detected objects Nmax in step S1206 (Yes in step S 1206), the process proceeds to step S 1208.

In step S1208, the distance information generation unit 322 outputs the object distance information for each of the Nmax objects to the route generation unit 330 together with information regarding time, and ends the process. These pieces of information are stored in the memory 180. Distance information from the radar device 120 is also stored in the memory 180 together with time information. The flow in Fig. 12 is periodically repeated until a user issues an end instruction (not shown).

Through the above object distance information generation process, object distance information is generated for each object included in the outside information. In particular, by statistically determining distance information of an object from distance information included in a region of the distance image 820 corresponding to the object detected in the image 810, it is possible to suppress a variation in the distance information for each pixel due to noise, the accuracy of calculation, and the like.

Therefore, it is possible to acquire information indicating a distance of an object with higher accuracy. A method of statistically determining distance information is, as described above, a method of taking the most frequently appearing distance information, average value, median value, and the like from a distribution of the distance information, and various methods may be adopted.

Next, a route information generation process (route generation process) executed by the route generation unit 330 of the route generation ECU 130 will be described. The route information is information including a traveling direction and a speed of the vehicle. It can also be said that route information is driving plan information. The route generation unit 330 outputs the route information to the vehicle control ECU 140. The vehicle control ECU 140 controls a traveling direction or a speed of the vehicle by controlling the drive unit 170 on the basis of the route information.

In First Embodiment, the route generation unit 330 generates route information such that if there is another vehicle (preceding vehicle) in the traveling direction of the vehicle 100, the vehicle is traveling following the preceding vehicle. The route generation unit 330 generates route information such that the vehicle 100 takes an avoidance action not to collide with an object.

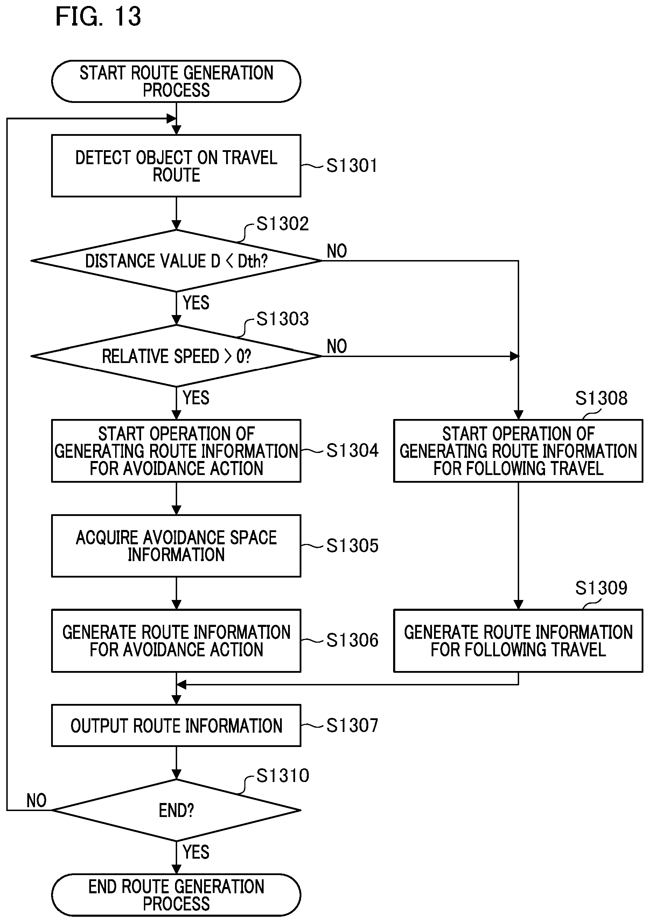

Fig. 13 is a flowchart showing an example of a route generation process executed by the route generation unit 330 according to First Embodiment. An operation in each step in the flowchart of Fig. 13 is performed by the computer included in the route generation apparatus 150 executing the computer program stored in the memory.

For example, if a user issues an instruction for starting the route generation process, the route generation unit 330 starts the flow in Fig. 13, and generates route information of the vehicle 100 on the basis of outside information, object distance information, and distance information generated by the radar device 120. The route generation ECU 130 reads, for example, the outside information, the object distance information, and the distance information generated by the radar device 120 at each time from the memory 180 provided in the route generation apparatus 150, and performs the process.

In step S1301, the route generation unit 330 detects objects on a planned travel route of the vehicle 100 from the outside information and the object distance information. The route generation unit 330 compares an azimuth of a planned traveling direction of the vehicle 100 with a position and the type of an object included in the outside information to determine the object on the travel route.

It is assumed that the planned traveling direction of the vehicle 100 is specified on the basis of information (a steering angle, a speed, and the like) regarding the control of the vehicle 100 acquired from the vehicle control ECU 140. The route generation unit 330 determines that there is "no object" on the travel route if no object is detected.

For example, it is assumed that the imaging device 110 acquires the image 810 shown in Fig. 8A. If the route generation unit 330 determines that vehicle 100 is traveling in the direction along the lane 805 on the basis of the information regarding the control of vehicle 100 acquired from vehicle control ECU 140, the route generation unit 330 detects the vehicle 802 as an object on the travel route.

In steps S1302 and S1303, the route generation unit 330 determines whether to generate route information for following travel or route information for an avoidance action on the basis of a distance between the vehicle 100 and the object on the travel route and the speed Vc of vehicle 100.

In step S1302, the route generation unit 330 determines whether the distance between the vehicle 100 and the object on the travel route is less than a threshold value Dth. The threshold value Dth is expressed as a function of the traveling speed Vc of the vehicle 100. The higher the traveling speed, the greater the threshold value Dth.

If the route generation unit 330 determines that the distance between the vehicle 100 and the object on the travel route is less than the threshold value Dth (Yes in step S1302), the process proceeds to step S1303. If the route generation unit 330 determines that the distance between the vehicle 100 and the object on the travel route is equal to or more than the threshold value Dth (No in step S 1302), the process proceeds to step S 1308.

In step S1303, the route generation unit 330 determines whether a relative speed between the vehicle 100 and the object on the travel route is a positive value. The route generation unit 330 acquires an identification number of the object on the travel route from the outside information, and acquires object distance information of the object on the travel route at each time from the outside information acquired during a period a predetermined time before the current time.

The route generation unit 330 calculates the relative speed between the vehicle 100 and the object on the travel route from the acquired object distance information of the object on the travel route for a period up to a predetermined time ago. If the relative speed (a difference between the speed of vehicle 100 and the speed of the object on travel route) is a positive value, this indicates that vehicle 100 and the object on the travel route are approaching.

If the route generation unit 330 determines that the relative speed between the vehicle 100 and the object on the travel route is a positive value (Yes in step S1303), the process proceeds to step S1304. If the route generation unit 330 determines that the relative speed between the vehicle 100 and the object on the travel route is not a positive value (No in step S1303), the process proceeds to step S1308.

Here, if the process proceeds to step S 1304, route information for executing an avoidance action is generated. If the process proceeds to step S1308, route information for executing following travel for maintaining the distance to the preceding vehicle is generated.

That is, if the distance between the vehicle 100 and the object on the travel route is less than the threshold value Dth and the relative speed between the vehicle 100 and the object on the travel route is a positive value, the route generation unit 330 executes an avoidance action. On the other hand, if the distance between the vehicle 100 and the object on the travel route is equal to or more than the threshold value Dth, the route generation unit 330 determines that following travel is to be performed.

Alternatively, if the distance between the vehicle 100 and the object on the travel route is less than the threshold value Dth and the relative speed between the vehicle 100 and the object on the travel route is zero or a negative value (if the vehicle is moving away from the object), the route generation unit 330 determines that following travel is to be performed.

If the distance between vehicle 100 and the object on the travel route is less than threshold value Dth obtained from the speed of vehicle 100, and the relative speed between vehicle 100 and the object on the travel route is a positive value, it is considered that there is a high possibility of the vehicle 100 colliding with the object on the travel route.

Therefore, the route generation unit 330 generates route information to take an avoidance action. Otherwise, the route generation unit 330 takes following travel. In addition to the determination described above, it may be determined whether or not the type of object detected on the travel route is a movable apparatus (an automobile, a motorcycle, or the like).

In step S 1304, the route generation unit 330 starts a process of generating route information for executing an avoidance action.

In step S1305, the route generation unit 330 acquires information regarding an avoidance space. The route generation unit 330 acquires distance information including a distance from the radar device 120 to an object on the side or rear of the vehicle 100 and prediction information regarding a distance to the object.

On the basis of the distance information (fourth distance information) acquired from the radar device 120, the speed of the vehicle 100, and information indicating a size of the vehicle 100, the route generation unit 330 acquires information indicating a direction and a size of a space to which the vehicle 100 can move around the vehicle 100.

In First Embodiment, the distance information (fourth distance information) acquired from the radar device 120 is used for the avoidance space, but may be used to generate combined distance information of an object.

In step S1306, the route generation unit 330 sets route information for an avoidance action on the basis of the information indicating the direction and the size of the space to which the vehicle 100 can move, the outside information, and the object distance information. The route information for the avoidance action is, for example, information for changing the course of the vehicle 100 to the right while decelerating if there is an avoidable space on the right side of the vehicle 100.

In step S1307, the route generation unit 330 outputs the route information to the vehicle control ECU 140. The vehicle control ECU 140 determines parameters for controlling the drive unit 170 on the basis of the route information, and controls drive unit 170 such that the vehicle 100 will pass through the route indicated by the acquired route information.

Specifically, the vehicle control ECU 140 determines, on the basis of the route information, a steering angle, an accelerator control value, a brake control value, a control signal for gear engagement, a lamp lighting control signal, and the like.

Here, step S 1307 functions as a route generation step (route generation unit) of generating route information on the basis of distance information. On the other hand, in step S 1308, the route generation unit 330 starts a process of generating route information for executing following driving.

In step S 1309, the route generation unit 330 generates route information for the vehicle 100 to follow an object (preceding vehicle) on the travel route. Specifically, the route generation unit 330 generates route information such that a distance (inter-vehicle distance) between the vehicle 100 and the preceding vehicle is maintained within a predetermined range.

For example, if the relative speed between the vehicle 100 and the preceding vehicle is zero or a negative value, or if the inter-vehicle distance is equal to or more than a predetermined distance, the route generation unit 330 generates route information such that a predetermined inter-vehicle distance is maintained through acceleration and deceleration while keeping the traveling direction of the vehicle 100 straight.

The route generation unit 330 generates route information such that the traveling speed of the vehicle 100 does not exceed a predetermined value (for example, a legal speed of the road on which the vehicle 100 is traveling or a set traveling speed based on an instruction from the driver 101). After step S1309, the process proceeds to step S1307, and the vehicle control ECU 140 controls the drive unit 170 on the basis of the generated route information.

Here, the vehicle control ECU 140 functions as a traveling control unit configured to control a travel state on the basis of the route information that is generated by the route generation unit 330 on the basis of information such as a position or a size of an object detected by the object detection unit 323.

Next, in step S1310, it is determined whether or not the user has issued an instruction for ending the route generation process. If Yes, the route information generation process performed by the route generation unit 330 is ended. If No, the process returns to step S1301 to repeatedly execute the process of generating route information.

According to the control described above, by statistically processing distance information within a frame based on a position and a size of an object in an image, the influence of sensor noise or the influence of a local distance error caused by high-luminance reflection from a subject can be reduced, and a distance value to each object can be calculated with high accuracy.

A distance value to each object can be made highly accurate, and a route of the vehicle 100 calculated by the route generation ECU 130 can be calculated with high accuracy, so that the vehicle 100 can travel more stably.

In the above process, a region of an object is shown as a rectangular region (object frame) including the object, but the region of the object may be a region having a shape of the object with an outer circumference of the object in an image as a boundary. In that case, in step S702, the object detection unit 323 stores a region where an object is present in the image 810 in the outside information as a region of the object. For example, the object detection unit 323 can perform region division for each object by identifying attributes for each pixel of image data.

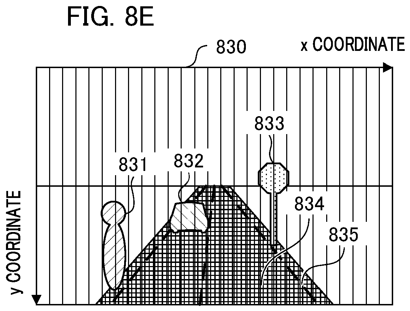

Fig. 8E is a schematic diagram showing an example in which the object detection unit 323 performs region division for each object and the result is superimposed on the image 810. A region 831 represents a region of the person 801, a region 832 represents s region of the vehicle 802, and a region 833 represents a region of the sign 803. A region 834 represents a region of the road 804 and a region 835 represents a region of the lane 805.

In this case, in steps S1203 and S1204, the distance information generation unit 322 may calculate, for example, a frequency distribution of distance values included in each region shown in Fig. 8E for each object.

By defining the region of the object as described above, it becomes difficult to include distance information such as the background other than the object in the region. That is, it is possible to reflect the distance information of the object more effectively in the distribution of the distance information within the region. Therefore, the influence of regions other than the object, such as the background and the foreground of the object, can be reduced, and thus a distance value of the object can be calculated with higher accuracy.

Second Embodiment

Image information and distance image information are sequentially output from the imaging device 110 of First Embodiment. The object detection unit 323 sequentially generates outside information by using image information that is sequentially received. The outside information includes an identification number of an object, and if an object with the same identification number is detected at each of certain time T0 and time T1, a temporal change in distance information of the object, a detected size, or the like can be determined.

Therefore, in the Second Embodiment, the distance information generation unit 322 calculates an average of the distance values D of objects with the same identification number in a predetermined time range. Consequently, a distance variation in the time direction is reduced.

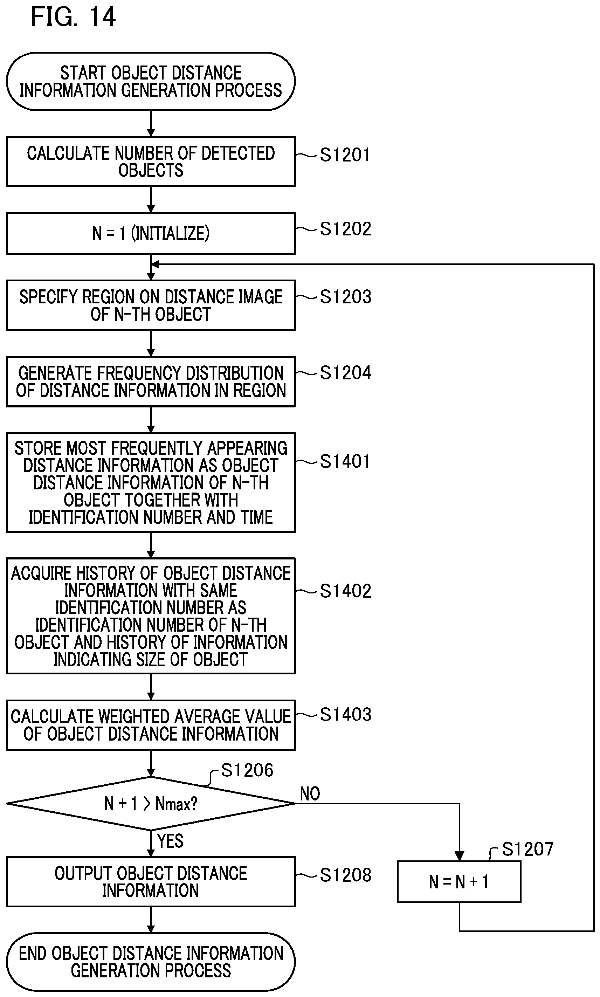

Fig. 14 is a flowchart showing an example of an object distance information generation process performed by the distance information generation unit 322 in Second Embodiment. An operation in each step in the flowchart of Fig. 14 is performed by the computer included in the route generation apparatus 150 executing the computer program stored in the memory. Regarding each process in this flowchart, the processes denoted by the same numbers as the processes shown in Fig. 12 are the same as the processes described with reference to Fig. 12.

In step S1401, the distance information generation unit 322 sets the most frequently appearing distance information from the frequency distribution generated in step S1204 as object distance information indicating a distance of the N-th object. The distance information generation unit 322 stores (stores) the object distance information together with the identification number and the time in the memory 340.

In step S 1402, the distance information generation unit 322 acquires a history of object distance information with the same identification number as the identification number of the N-th object among the pieces of object distance information stored in the memory 340. The distance information generation unit 322 acquires object distance information with the same identification number corresponding to the time a predetermined time before the time corresponding to the latest object distance information.

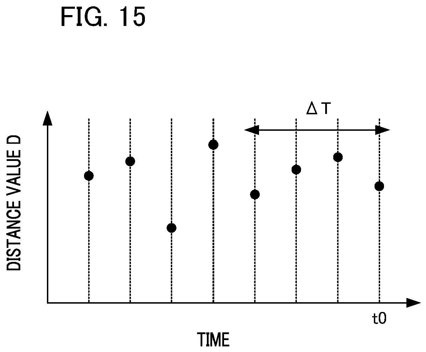

Fig. 15 is a schematic diagram for describing an example of a temporal change in object distance information of an object with the same identification number as that of the N-th object. The horizontal axis expresses time, and the vertical axis expresses object distance information (distance value D). Time t0 indicates the time at which the latest distance value D is acquired.

In step S1403, the distance information generation unit 322 calculates an average value of object distance information included in a time range a predetermined time before the time at which the latest object distance information is acquired, from a history of the object distance information of the object with the same identification number as that of the acquired N-th object. The distance information generation unit 322 calculates, for example, an average value of distance values of four points included in a predetermined time range $\Delta T$ in Fig. 15.

As described above, the identification number included in the outside information is used to acquire a history of the object distance information (distance value) of the same object, and by taking the time average, it is possible to suppress variations. Even if a road on which the vehicle 100 is traveling changes (for example, a curve, a slope, or a bad road with many unevenness), an average value in the time direction can be calculated while tracking the same object.

Therefore, it is possible to reduce a variation in a distance value due to noise such as light shot noise contained in an image signal while reducing the influence of changes in a travel environment, and to calculate a distance value of an object with higher accuracy. In the Second Embodiment, in order to obtain a similar effect, when acquiring object distance information, object distance information that is averaged over time to some extent may be acquired via a low-pass filter.

In the above First and Second Embodiments, an imaging apparatus that acquires left and right parallax images according to the imaging surface phase difference method via the same optical system in order to acquire distance image data has been described as an example, but a method of acquiring parallax images is not limited to this.

Left and right parallax images may be acquired by a so-called stereo camera that acquires the left and right parallax images with two imaging devices provided left and right with a predetermined distance.

Distance information may be acquired by using a distance measuring device such as LiDAR, and the above distance measurement may be performed by using outside information obtained through image recognition of a captured image obtained from an imaging device.

In the above First and Second Embodiments, the combined distance information may be generated on the basis of histories of at least two of the first to third distance information of the object or a history of the combined distance information. The above embodiments may be combined as appropriate, and include, for example, the following configurations.

In the above embodiments, an example in which the distance calculation device as an electronic device is installed in a vehicle such as an automobile as a movable apparatus has been described. However, the movable apparatus may be any apparatus such as a motorcycle, a bicycle, a wheelchair, a ship, an airplane, a drone, or a mobile robot such as an AGV or an AMR as long as the apparatus is movable.

The distance calculation device as an electronic device of the Present Embodiment is not limited to those mounted on the movable apparatus, and includes a device that acquires an image from a camera or the like mounted on the movable apparatus through communication, and calculates a distance at a position away from the movable apparatus.

While the present invention has been described with reference to exemplary embodiments, it is to be understood that the invention is not limited to the disclosed exemplary embodiments.

As a part or the whole of the control according to the embodiments, a computer program realizing the function of the embodiments described above may be supplied to the image processing apparatus through a network or various storage media. A computer (or a CPU, an MPU, or the like) of the image processing apparatus may be configured to read and execute the program. In such a case, the program and the storage medium storing the program configure the present invention.

This application claims the benefit of Japanese Patent Application No. 2022-082368, filed on May 19, 2022.

**Claims**

1. An image processing apparatus comprising:
   a boundary detection unit (321) configured to:

   divide image information into strip-shaped divisional regions extending in a predetermined direction, and
   detect boundaries based on color differences within each divisional region to create sub-regions; and
   a combined distance information determination unit (322) configured to:

   generate reliability values for distance information of each pixel based on color information, and
   determine combined distance information for each sub-region by statistically processing distance information weighted according to said reliability values.

2. The image processing apparatus according to claim 1, further comprising:
   a classification unit (323) configured to perform predetermined classification according to the combined distance information for the sub-region.

3. The image processing apparatus according to claim 2, wherein the classification unit classifies the sub-region as one of three categories including the sky, a road, and others.

4. The image processing apparatus according to claim 1, wherein the divisional regions extend in a vertical direction of a screen and are arranged in a horizontal direction of the screen.

5. The image processing apparatus according to claim 1, further comprising:
   a distance information measurement unit configured to detect the distance information for each pixel of the image information.

6. The image processing apparatus according to claim 5, further comprising:

   an imaging unit configured to image a subject and generate the image information, and
   the distance information measurement unit measures the distance information according to a phase difference ranging method on the basis of signals from a first photoelectric conversion portion and a second photoelectric conversion portion disposed in a pixel of the imaging unit.

7. The image processing apparatus according to claim 1, wherein the boundary detection unit detects a position where a difference in the color information of the adjacent pixels is more than a predetermined threshold value as the boundary.

8. The image processing apparatus according to claim 7, wherein

   each of the divisional regions has a plurality of pixels arranged in a horizontal direction of a screen, and
   the color information is a representative value obtained on the basis of the plurality of pixels arranged in the horizontal direction of the screen.

9. The image processing apparatus according to claim 2, further comprising:
   an object detection unit configured to detect an object by integrating images of the divisional regions including the sub-region classified by the classification unit.

10. The image processing apparatus according to claim 1, further comprising:

    an acquisition unit configured to acquire the combined distance information; and
    a display control unit configured to display a color determined on the basis of the combined distance information acquired by the acquisition unit on a display device for each sub-region.

11. A movable apparatus comprising:

    the image processing apparatus according to claim 1,
    an object detection unit configured to detect an object by combining images of the divisional regions including the sub-region of which the combined distance information has been determined; and

a traveling control unit configured to control a traveling state on the basis of information regarding the object detected by the object detection unit.

**12.** An image processing method comprising:

dividing image information into strip-shaped divisional regions extending in a predetermined direction; detecting boundaries based on color differences within each divisional region to create sub-regions; generating reliability values for distance information of each pixel based on color information; and determining combined distance information for each sub-region by statistically processing distance information weighted according to said reliability values.

**13.** A non-transitory computer-readable storage medium storing a computer program comprising instructions for executing the method of claim 12.


**Patentansprüche**

**1.** Bildverarbeitungsvorrichtung mit:

einer Randerfassungseinheit (321), die eingerichtet ist zum:

Einteilen von Bildinformationen in streifenförmige Teilregionen, die sich in eine vorbestimmte Richtung erstrecken, und
Erfassen von Rändern beruhend auf Farbunterschieden in jeder Teilregion zum Erzeugen von Unterregionen und

einer kombinierten Entfernungsinformationsbestimmungseinheit (322), die eingerichtet ist zum:

Erzeugen von Zuverlässigkeitswerten für Entfernungsinformationen jedes Bildelements beruhend auf Farbinformationen und
Bestimmen von kombinierten Entfernungsinformationen für jede Unterregion durch statistisches Verarbeiten von Entfernungsinformationen, die gemäß den Zuverlässigkeitswerten gewichtet sind.

**2.** Bildverarbeitungsvorrichtung nach Anspruch 1, ferner mit:
einer Klassifizierungseinheit (323), die zum Durchführen einer vorbestimmten Klassifizierung gemäß den kombinierten Entfernungsinformationen für die Unterregion eingerichtet ist

**3.** Bildverarbeitungsvorrichtung nach Anspruch 2, wobei die Klassifizierungseinheit die Unterregion als eine von drei Kategorien klassifiziert, die den Himmel, eine Straße und Anderes enthalten.

**4.** Bildverarbeitungsvorrichtung nach Anspruch 1, wobei sich die Teilregionen in eine vertikale Richtung eines Bildschirms erstrecken und in einer horizontalen Richtung des Bildschirms angeordnet sind.

**5.** Bildverarbeitungsvorrichtung nach Anspruch 1, ferner mit:
einer Entfernungsinformationsmesseinheit, die zum Erfassen der Entfernungsinformationen für jedes Bildelement der Bildinformationen eingerichtet ist.

**6.** Bildverarbeitungsvorrichtung nach Anspruch 5, mit:

einer Bildgebungseinheit, die zum Abbilden eines Subjekts und Erzeugen der Bildinformationen eingerichtet ist, und
der Entfernungsinformationsmesseinheit, die Entfernungsinformationen gemäß einem Phasendifferenzentfernungsmessverfahren auf der Grundlage von Signalen von einem ersten fotoelektrischen Umwandlungsabschnitt und einem zweiten fotoelektrischen Umwandlungsabschnitt misst, die in einem Bildelement der Bildgebungseinheit angeordnet sind.

**7.** Bildverarbeitungsvorrichtung nach Anspruch 1, wobei die Randerfassungseinheit eine Position als den Rand erfasst, an der ein Unterschied in den Farbinformationen der angrenzenden Bildelemente größer als ein vorbestimmter Schwellenwert ist.

8. Bildverarbeitungsvorrichtung nach Anspruch 7, wobei

jede der Teilregionen eine Vielzahl von Bildelementen aufweist, die in einer horizontalen Richtung eines Bildschirms angeordnet sind, und

die Farbinformationen einen repräsentativen Wert darstellen, der auf der Grundlage der Vielzahl von Bildelementen erhalten wird, die in der horizontalen Richtung auf dem Bildschirm angeordnet sind.

9. Bildverarbeitungsvorrichtung nach Anspruch 2, ferner mit:
einer Objekterfassungseinheit, die zum Erfassen eines Objekts durch Integrieren von Bildern der Teilregionen eingerichtet ist, die die durch die Klassifizierungseinheit klassifizierte Unterregion enthalten.

10. Bildverarbeitungsvorrichtung nach Anspruch 1, ferner mit:

einer Beschaffungseinheit, die zum Beschaffen der kombinierten Entfernungsinformationen eingerichtet ist, und

einer Anzeigesteuereinheit, die zum Anzeigen einer Farbe, die auf der Grundlage der durch die Beschaffungseinheit beschafften kombinierten Entfernungsinformationen bestimmt wird, auf einer Anzeigeeinrichtung für jede Unterregion eingerichtet ist.

11. Bewegliche Vorrichtung mit:

der Bildverarbeitungsvorrichtung nach Anspruch 1,

einer Objekterfassungseinheit, die zum Erfassen eines Objekts durch Kombinieren von Bildern der Teilregionen eingerichtet ist, die die Unterregion enthalten, für die die kombinierten Entfernungsinformationen bestimmt wurden, und

einer Fahrsteuereinheit, die zum Steuern eines Fahrzustands auf der Grundlage von Informationen hinsichtlich des durch die Objekterfassungseinheit erfassten Objekts eingerichtet ist.

12. Bildverarbeitungsverfahren mit:

Einteilen von Bildinformationen in streifenförmige Teilregionen, die sich in eine vorbestimmte Richtung erstrecken,

Erfassen von Rändern beruhend auf Farbunterschieden in jeder Teilregion zum Erzeugen von Unterregionen,

Erzeugen von Zuverlässigkeitswerten für Entfernungsinformationen jedes Bildelements beruhend auf Farbinformationen und

Bestimmen von kombinierten Entfernungsinformationen für jede Unterregion durch statistisches Verarbeiten von Entfernungsinformationen, die gemäß den Zuverlässigkeitswerten gewichtet sind.

13. Nichtflüchtiges computerlesbares Speichermedium, das ein Computerprogramm speichert, das Instruktionen zum Ausführen des Verfahrens nach Anspruch 12 umfasst.

**Revendications**

1. Dispositif de traitement d'image comprenant :
une unité de détection de limite (321) configurée pour :

diviser une information d'image en des régions divisées en forme de bande s'étendant dans une direction prédéterminée, et

détecter des limites en se basant sur des différences de couleur dans chaque région divisée pour créer des sous-régions ; et

une unité de détermination d'information de distance combinée (322) configurée pour :

générer des valeurs de fiabilité pour une information de distance de chaque pixel en se basant sur une information de couleur, et

de déterminer une information de distance combinée pour chaque sous-région en traitant statistiquement une information de distance pondérée selon lesdites valeurs de fiabilité.

**2.** Dispositif de traitement d'image selon la revendication 1, comprenant en outre :
une unité de classification (323) configurée pour réaliser une classification prédéterminée selon l'information de distance combinée pour la sous-région.

**3.** Dispositif de traitement d'image selon la revendication 2, dans lequel l'unité de classification classifie la sous-région comme l'une de trois catégories incluant le ciel, une route, et autres.

**4.** Dispositif de traitement d'image selon la revendication 1, dans lequel les régions divisées s'étendent dans une direction verticale d'un écran et sont agencées dans une direction horizontale de l'écran.

**5.** Dispositif de traitement d'image selon la revendication 1, comprenant en outre :
une unité de mesure d'information de distance configurée pour détecter l'information de distance pour chaque pixel de l'information d'image.

**6.** Dispositif de traitement d'image selon la revendication 5, comprenant en outre :

une unité d'imagerie configurée pour imager un sujet et générer l'information d'image, et
l'unité de mesure d'information de distance mesure l'information de distance en fonction d'un procédé de télémétrie à différence de phase en se basant sur des signaux venant d'une première partie de conversion photoélectrique et d'une seconde partie de conversion photoélectrique disposées dans un pixel de l'unité d'imagerie.

**7.** Dispositif de traitement d'image selon la revendication 1, dans lequel l'unité de détection de limite détecte une position où une différence dans l'information de couleur des pixels adjacents est supérieure à une valeur de seuil prédéterminée comme la limite.

**8.** Dispositif de traitement d'image selon la revendication 7, dans lequel

chacune des régions divisées a une pluralité de pixels agencés dans une direction horizontale d'un écran, et
l'information de couleur est une valeur représentative obtenue en se basant sur la pluralité de pixels agencés dans la direction horizontale de l'écran.

**9.** Dispositif de traitement d'image selon la revendication 2, comprenant en outre :
une unité de détection d'objet configurée pour détecter un objet en intégrant des images des régions divisées incluant la sous-région classifiée par l'unité de classification.

**10.** Dispositif de traitement d'image selon la revendication 1, comprenant en outre :

une unité d'acquisition configurée pour acquérir l'information de distance combinée ; et
une unité de commande d'affichage configurée pour afficher une couleur déterminée en se basant sur l'information de distance combinée acquise par l'unité d'acquisition sur un dispositif d'affichage pour chaque sous-région.

**11.** Dispositif mobile comprenant :

le dispositif de traitement d'image selon la revendication 1,
une unité de détection d'objet configurée pour détecter un objet en combinant des images des régions divisées incluant la sous-région dont l'information de distance combinée a été déterminée ; et
une unité de commande de déplacement configurée pour commander un état de déplacement en se basant sur une information concernant l'objet détecté par l'unité de détection d'objet.

**12.** Procédé de traitement d'image comprenant :

de diviser une information d'image en des régions divisées en forme de bande s'étendant dans une direction prédéterminée ;
de détecter des limites en se basant sur des différences de couleur dans chaque région divisée pour créer des sous-régions :

de générer des valeurs de fiabilité pour une information de distance de chaque pixel en se basant sur une information de couleur ; et
de déterminer une information de distance combinée pour chaque sous-région en traitant statistiquement une information de distance pondérée selon lesdites valeurs de fiabilité.

13. Support de stockage lisible informatiquement non transitoire stockant un programme informatique comprenant des instructions pour exécuter le procédé selon la revendication 12.

FIG. 1

# FIG. 2

FIG. 3

EP 4 280 178 B1

## FIG. 4A

## FIG. 4B

# FIG. 5A

# FIG. 5B

# FIG. 5C

# FIG. 5D

## FIG. 6A

START DEVELOPING PROCESS

GENERATE COMBINED IMAGE SIGNAL — S601

CORRECT DEFECTIVE PIXEL — S602

LIGHT AMOUNT CORRECTION PROCESS — S603

NOISE REDUCTION PROCESS — S604

DEMOSAIC PROCESS — S605

GAMMA CORRECTION PROCESS — S606

COLOR SPACE CONVERSION PROCESS — S607

DISTORTION CORRECTION PROCESS — S608

OUTPUT PROCESS — S609

END DEVELOPING PROCESS

## FIG. 6B

START DISTANCE IMAGE DATA GENERATION PROCESS

GENERATE LUMINANCE IMAGE SIGNAL — S611

CORRECT LIGHT AMOUNT BALANCE — S612

NOISE REDUCTION PROCESS — S613

CALCULATE PARALLAX AMOUNT — S614

CONVERT PARALLAX AMOUNT INTO DEFOCUS AMOUNT — S615

CONVERT DEFOCUS AMOUNT INTO DISTANCE VALUE — S616

OUTPUT PROCESS — S617

END DISTANCE IMAGE DATA GENERATION PROCESS

## FIG. 7A

START OUTSIDE INFORMATION
GENERATION PROCESS

↓

BOUNDARY/OBJECT
DETECTION PROCESS — S701

↓

DETECT OBJECT INCLUDED IN
IMAGE — S702

↓

TRACK REGISTERED OBJECT — S703

↓

REGISTER OUTSIDE
INFORMATION OF NEW OBJECT — S704

↓

OUTPUT OUTSIDE
INFORMATION — S705

↓

END OUTSIDE INFORMATION
GENERATION PROCESS

## FIG. 7B

BOUNDARY/OBJECT
DETECTION PROCESS

↓

OBJECT BOUNDARY
CANDIDATE DETERMINATION
PROCESS — S7011

↓

DISTANCE EQUIVALENT
INFORMATION COMBINING
PROCESS — S7012

↓

OBJECT DETECTION
PROCESS — S7013

↓

END

FIG. 8A

FIG. 8B

EP 4 280 178 B1

FIG. 8D

x COORDINATE

823

820

822

821

y COORDINATE

FIG. 8C

x COORDINATE

820

y COORDINATE

## FIG. 8E

# FIG. 9

```
        ┌──────────────────────────────┐
        │  OBJECT BOUNDARY CANDIDATE    │
        │  DETERMINATION PROCESS        │
        └──────────────┬───────────────┘
                       │              ⌐ S901
        ┌──────────────▼───────────────┐
        │  CONVERT RGB IMAGE INTO Lab   │
        │  IMAGE                        │
        └──────────────┬───────────────┘
                       │              ⌐ S902
        ┌──────────────▼───────────────┐
        │  COMPUTE COLOR DIFFERENCE     │
        │  (COLOR DISTANCE ΔC) IN       │
        │  VERTICAL (HORIZONTAL)        │
        │  DIRECTION                    │
        └──────────────┬───────────────┘
                       │              ⌐ S903
                    ◇  ▼                         NO
           COLOR DIFFERENCE ──────────────────────────┐
        THRESHOLD VALUE PROCESSING                     │
              ΔC > Th?                                 │
                       │ YES      ⌐ S904          ⌐ S905│
        ┌──────────────▼───────────────┐  ┌────────────▼─────┐
        │  SET DISTANCE BOUNDARY        │  │  SET NON-DISTANCE │
        │  CANDIDATE                    │  │  BOUNDARY PIXEL    │
        └──────────────┬───────────────┘  └────────────┬─────┘
                       │◄──────────────────────────────┘
                       │              ⌐ S906
           NO       ◇  ▼
        ◄──────── IS STRIP WIDTH
              DISTANCE BOUNDARY CANDIDATE
                   DETERMINED?
                       │ YES      ⌐ S907
        ┌──────────────▼───────────────┐
        │  SET DISTANCE BOUNDARY        │
        │  CANDIDATE IN STRIP           │
        └──────────────┬───────────────┘
                       │              ⌐ S908
        ┌──────────────▼───────────────┐
        │  SMALLEST HEIGHT THRESHOLD    │
        │  VALUE PROCESSING             │
        └──────────────┬───────────────┘
                       │              ⌐ S909
        ┌──────────────▼───────────────┐
        │  FINAL BOUNDARY CANDIDATE     │
        │  SETTING PROCESS              │
        └──────────────┬───────────────┘
                       │
                ┌──────▼──────┐
                │     END     │
                └─────────────┘
```

## FIG. 10

DISTANCE EQUIVALENT
INFORMATION COMBINING
PROCESS

S1001

DISTANCE BOUNDARY
RECTANGLE GENERATION
PROCESS

S1002

RELIABILITY WEIGHTED DISTANCE
EQUIVALENT INFORMATION/
HEIGHT INFORMATION AVERAGING
PROCESS IN RECTANGLE

S1003

RELIABILITY PIXEL RATIO
COMPUTATION PROCESS IN
RECTANGLE

S1004

RELIABILITY PIXEL
RATIO THRESHOLD VALUE
PROCESSING?

NO

YES

S1006

COMBINED DISTANCE EQUIVALENT
INFORMATION/HEIGHT
INFORMATION

S1005

RECTANGULAR REGION WITH
LOW RELIABILITY

GENERATE DISTANCE EQUIVALENT
INFORMATION/HEIGHT
INFORMATION MAP
S1007

END

## FIG. 11

```
          ┌─────────────────────┐
          │  OBJECT DETECTION   │
          │      PROCESS        │
          └─────────────────────┘
                     │
                     ▼               ⌐S1101
          ┌─────────────────────┐
          │ SEARCH FOR OBJECT   │
          │ BOUNDARY FROM SCREEN│
          │ UPPER PART FOR      │
          │ EACH STRIP          │
          └─────────────────────┘
                     │
                     ▼               ⌐S1102
               ◇─────────────◇
              ╱   DISTANCE     ╲        NO
          ◇ THRESHOLD VALUE      ◇──────────┐
              ╲ PROCESSING IN   ╱           │
               ╲ RECTANGLE?    ╱            │
                ◇─────────────◇             │
                     │ YES                  │
                     ▼         ⌐S1104       ▼       ⌐S1103
          ┌─────────────────────┐    ┌──────────────┐
          │ DETERMINE BOUNDARY  │    │  SKY REGION  │
          │ BETWEEN SKY AND     │    └──────────────┘
          │ OBJECT              │            │
          └─────────────────────┘            │
                     │                        │
                     ▼         ⌐S1105         │
          ┌─────────────────────┐             │
          │ SEARCH FOR OBJECT   │             │
          │ BOUNDARY FROM SCREEN│             │
          │ LOWER PART FOR      │             │
          │ EACH STRIP          │             │
          └─────────────────────┘             │
                     │                         │
                     ▼         ⌐S1106          │
               ◇─────────────◇                │
              ╱    HEIGHT      ╲       NO      │
          ◇ THRESHOLD VALUE      ◇────────┐    │
              ╲ PROCESSING IN   ╱         │    │
               ╲ RECTANGLE?    ╱          │    │
                ◇─────────────◇           │    │
                     │ YES                │    │
                     ▼        ⌐S1108      ▼  ⌐S1107
          ┌─────────────────────┐   ┌────────────────┐
          │ DETERMINE BOUNDARY  │   │ ROAD SURFACE   │
          │ BETWEEN ROAD SURFACE│   │    REGION      │
          │ AND OBJECT          │   └────────────────┘
          └─────────────────────┘
                     │         ⌐S1109
                     ▼
          ┌─────────────────────┐
          │ DETERMINE ROAD      │
          │ SURFACE, SKY, AND   │
          │ OBJECT CATEGORIES   │
          │ FOR EACH STRIP      │
          └─────────────────────┘
                     │
                     ▼
          ┌─────────────────────┐
          │        END          │
          └─────────────────────┘
```

# FIG. 12

```
┌──────────────────────────────┐
│   START OBJECT DISTANCE       │
│ INFORMATION GENERATION        │
│        PROCESS                │
└──────────────────────────────┘
                │
                ▼
┌──────────────────────────────┐
│   CALCULATE NUMBER OF         │──── S1201
│    DETECTED OBJECTS           │
└──────────────────────────────┘
                │
                ▼
┌──────────────────────────────┐
│     N = 1 (INITIALIZE)        │──── S1202
└──────────────────────────────┘
                │
                ▼
┌──────────────────────────────┐
│  SPECIFY REGION ON DISTANCE   │──── S1203
│    IMAGE OF N-TH OBJECT       │
└──────────────────────────────┘
                │
                ▼
┌──────────────────────────────┐
│   GENERATE FREQUENCY          │
│ DISTRIBUTION OF DISTANCE      │──── S1204
│   INFORMATION IN REGION       │
└──────────────────────────────┘
                │
                ▼
┌──────────────────────────────┐
│   SET MOST FREQUENTLY         │
│  APPEARING DISTANCE           │
│ INFORMATION AS OBJECT         │──── S1205
│ DISTANCE INFORMATION OF       │
│       N-TH OBJECT             │
└──────────────────────────────┘
                │            S1206
                ▼
            ╱─────────╲         NO          S1207
           ╱ N + 1 >    ╲───────────────┐
           ╲  Nmax?     ╱            ┌────────────┐
            ╲─────────╱             │  N = N + 1  │
                │ YES                └────────────┘
                ▼
┌──────────────────────────────┐
│  OUTPUT OBJECT DISTANCE       │──── S1209
│       INFORMATION             │
└──────────────────────────────┘
                │
                ▼
┌──────────────────────────────┐
│   END OBJECT DISTANCE         │
│ INFORMATION GENERATION        │
│        PROCESS                │
└──────────────────────────────┘
```

FIG. 13

START ROUTE GENERATION PROCESS

↓

DETECT OBJECT ON TRAVEL ROUTE — S1301

↓

DISTANCE VALUE D < Dth? — S1302
— NO →

YES ↓

RELATIVE SPEED > 0? — S1303
— NO →

YES ↓

START OPERATION OF GENERATING ROUTE INFORMATION FOR AVOIDANCE ACTION — S1304

↓

ACQUIRE AVOIDANCE SPACE INFORMATION — S1305

↓

GENERATE ROUTE INFORMATION FOR AVOIDANCE ACTION — S1306

START OPERATION OF GENERATING ROUTE INFORMATION FOR FOLLOWING TRAVEL — S1308

↓

GENERATE ROUTE INFORMATION FOR FOLLOWING TRAVEL — S1309

↓

OUTPUT ROUTE INFORMATION — S1307

↓

END? — S1310
NO →

YES ↓

END ROUTE GENERATION PROCESS

# FIG. 14

START OBJECT DISTANCE INFORMATION GENERATION PROCESS

↓

CALCULATE NUMBER OF DETECTED OBJECTS — S1201

↓

N = 1 (INITIALIZE) — S1202

↓

SPECIFY REGION ON DISTANCE IMAGE OF N-TH OBJECT — S1203

↓

GENERATE FREQUENCY DISTRIBUTION OF DISTANCE INFORMATION IN REGION — S1204

↓

STORE MOST FREQUENTLY APPEARING DISTANCE INFORMATION AS OBJECT DISTANCE INFORMATION OF N-TH OBJECT TOGETHER WITH IDENTIFICATION NUMBER AND TIME — S1401

↓

ACQUIRE HISTORY OF OBJECT DISTANCE INFORMATION WITH SAME IDENTIFICATION NUMBER AS IDENTIFICATION NUMBER OF N-TH OBJECT AND HISTORY OF INFORMATION INDICATING SIZE OF OBJECT — S1402

↓

CALCULATE WEIGHTED AVERAGE VALUE OF OBJECT DISTANCE INFORMATION — S1403

↓

S1206
N + 1 > Nmax?

NO → N = N + 1 — S1207

YES ↓

OUTPUT OBJECT DISTANCE INFORMATION — S1208

↓

END OBJECT DISTANCE INFORMATION GENERATION PROCESS

FIG. 15

**EP 4 280 178 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007281296 A
- US 2021272289 A1, CAI JIANZHAO
- US 20210902 A1
- JP 2022082368 A